(19) Europäisches Patentamt
European Patent Office
Office européen des brevets

(11) EP 3 067 336 B1

(12) # EUROPEAN PATENT SPECIFICATION

(45) Date of publication and mention of the grant of the patent:
**09.10.2019 Bulletin 2019/41**

(21) Application number: **15737841.5**

(22) Date of filing: **15.01.2015**

(51) Int Cl.:
***C03C 27/12*** *(2006.01)*
***B32B 17/10*** *(2006.01)*
***B32B 27/30*** *(2006.01)*
***B32B 27/08*** *(2006.01)*
***B32B 27/22*** *(2006.01)*
***B32B 27/42*** *(2006.01)*
***B32B 7/02*** *(2019.01)*

(86) International application number:
**PCT/JP2015/050976**

(87) International publication number:
**WO 2015/108118 (23.07.2015 Gazette 2015/29)**

(54) **INTERLAYER FILM FOR LAMINATED GLASS, AND LAMINATED GLASS**

ZWISCHENSCHICHTFOLIE FÜR LAMINIERTES GLAS UND LAMINIERTES GLAS

FILM INTERMÉDIAIRE POUR VERRE FEUILLETÉ ET VERRE FEUILLETÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2014 JP 2014005484**

(43) Date of publication of application:
**14.09.2016 Bulletin 2016/37**

(73) Proprietor: **Sekisui Chemical Co., Ltd.**
**Osaka-shi, Osaka 530-8565 (JP)**

(72) Inventors:
- **IWAMOTO, Tatsuya**
  **Kouka-shi**
  **Shiga 528-8585 (JP)**
- **UCHIMURA, Yuji**
  **Kouka-shi**
  **Shiga 528-8585 (JP)**

(74) Representative: **Ter Meer Steinmeister & Partner Patentanwälte mbB**
**Nymphenburger Straße 4**
**80335 München (DE)**

(56) References cited:
**EP-A1- 2 330 090**
**EP-A1- 2 594 539**
**EP-A1- 2 623 471**
**WO-A1-2012/043817**
**JP-A- 2000 169 194**
**JP-A- 2005 289 038**
**JP-A- 2006 248 826**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 067 336 B1

## Description

### Technical Field

The present invention relates to an interlayer film for laminated glass that is used in laminated glass. Furthermore, the present invention relates to laminated glass using the interlayer film for laminated glass.

### Background Art

Even when being shattered by external shock, laminated glass results in a small amount of broken glass pieces scattering, and therefore laminated glass is excellent in safety. Accordingly, laminated glass is widely used in automobiles, railroad vehicles, airplanes, ships, buildings, and the like. Laminated glass is manufactured by interposing an interlayer film for laminated glass between a pair of glass plates.

PTL 1 discloses an interlayer film which can improve the sound insulating properties of laminated glass in a high-frequency region over a wide temperature range. The interlayer film includes a first layer which contains a polyvinyl acetal resin and a plasticizer, a second layer which is laminated on a first surface of the first layer and contains a polyvinyl acetal resin and a plasticizer, and a third layer which is laminated on a second surface of the first layer that is opposite to the first surface and contains a polyvinyl acetal resin and a plasticizer. In the interlayer film, the content of hydroxyl groups of the polyvinyl acetal resin contained in the first layer is smaller than the content of hydroxyl groups of the polyvinyl acetal resin contained in the second and third layers, and a ratio of the thickness of the first layer to the total thickness of the second and third layers is equal to or less than 0.14.

PTL 2 discloses an interlayer film which can improve the penetration resistance over a wide temperature range. PTL 2 describes that, in order to improve the penetration resistance, the number of carbon atoms of acetal groups of a polyvinyl acetal resin is reduced, or a co-acetal resin using an aldehyde having a small number of carbon atoms is used. EP 2 623 471 A1 relates to an interlayer film for laminated glass comprising three directly adjacent layers, each of the three layers containing a polyvinylacetal resin and a plasticizer.

### Citation List

### Patent Literature

[PTL 1] WO2012/043816A1
[PTL 2] WO2006/038332A1

## Summary of Invention

### Technical Problem

In recent years, in order to lighten laminated glass, the reduction of the thickness of laminated glass has been examined. However, the reduction of the thickness of laminated glass has a problem in that the penetration resistance of the laminated glass easily deteriorates.

Therefore, the development of an interlayer film, in which the penetration resistance is further improved compared to the interlayer film of the prior art, is required.

An object of the present invention is to provide an interlayer film for laminated glass that can improve the penetration resistance of laminated glass.

### Solution to Problem

According to the present invention, there is provided a interlayer film for laminated glass as defined in claim 1.

Specific aspects of the interlayer film for laminated glass according to the present invention are defined in claims 2 to 8

According to another aspect of the present invention as defined in claim 9, laminated glass is provided which includes a first laminated glass member, a second laminated glass member, and the aforementioned interlayer film for laminated glass, in which the interlayer film for laminated glass is disposed between the first laminated glass member and the second laminated glass member.

Advantageous Effects of Invention

The interlayer film for laminated glass according to the present invention contains a polyvinyl acetal resin and a plasticizer. When two surfaces on both sides of the interlayer film have different glass transition temperatures respectively, a lower glass transition temperature (°C) between the glass transition temperatures of the two surfaces on both sides of the interlayer film is denoted by X. When the two surfaces on both sides of the interlayer film have the same glass transition temperature, the glass transition temperature (°C) of the two surfaces on both sides of the interlayer film is denoted by X. In addition, a tensile breaking energy (J/mm$^2$) of the interlayer film is denoted by Y. In this case, X is equal to or higher than 20°C and equal to or less than 50°C, and Y is equal to or greater than (0.043X + 0.83) J/mm$^2$. Consequently, it is possible to improve the penetration resistance of laminated glass using the interlayer film for laminated glass according to the present invention.

Brief Description of Drawings

Fig. 1 is a partial cross-sectional view schematically showing an interlayer film for laminated glass according to a first reference embodiment not belonging to the present invention.
Fig. 2 is a partial cross-sectional view schematically showing an interlayer film for laminated glass according to a second reference embodiment not belonging to the present invention.
Fig. 3 is a partial cross-sectional view schematically showing an interlayer film for laminated glass according to the present invention.
Fig. 4 is a partial cross-sectional view schematically showing a reference example, not belonging to the invention, of laminated glass using the interlayer film for laminated glass shown in Fig. 1. Description of Embodiments

Hereinafter, the present invention will be specifically described.
When two surfaces on both sides of the interlayer film for laminated glass according to the present invention have different glass transition temperatures respectively, a lower glass transition temperature (°C) between the glass transition temperatures of the two surfaces (first and second surfaces) on both sides of the interlayer film is denoted by X. Furthermore, when the two surfaces on both sides of the interlayer film have the same glass transition temperature, the glass transition temperature (°C) of the two surfaces (first and second surfaces) on both sides of the interlayer film is denoted by X. In addition, a tensile breaking energy (J/mm$^2$) of the interlayer film is denoted by Y. The unit of X is °C, and the unit of Y is J/mm$^2$. In the interlayer film for laminated glass according to the present invention, X is equal to or higher than 20°C and equal to or less than 50°C, and Y is equal to or greater than (0.043X + 0.83) J/mm$^2$. In the interlayer film for laminated glass according to the present invention, the following Expression (i) and Expression (ii) are satisfied. The two surfaces on both sides of the interlayer film may have different glass transition temperatures respectively or may have the same glass transition temperature. When the two surfaces on both sides of the interlayer film have the same glass transition temperature, the glass transition temperature X°C is the glass transition temperature of the two surfaces on both sides of the interlayer film.

$$20°C \leq X \leq 50°C \quad \cdots \text{ Expression (i)}$$

$$Y \geq (0.043X + 0.83)\ J/mm^2 \quad \cdots \text{ Expression (ii)}$$

Because the interlayer film for laminated glass according to the present invention is constituted as above, it is possible to improve the penetration resistance of laminated glass using the interlayer film. Furthermore, even when the thickness of the interlayer film or the thickness of the laminated glass using the interlayer film is reduced, high penetration resistance can be sufficiently maintained. In a case in which the respective layers in the interlayer film have the same thickness, by constituting the interlayer film for laminated glass according to the present invention as described above, it is possible to further improve the penetration resistance of the laminated glass compared to the case in which the interlayer film for laminated glass is not constituted as described above.
Through experiments, the inventors of the present invention confirmed that the penetration resistance of laminated glass is improved if Expression (ii) is satisfied. This can also be understood from examples and comparative examples which will be described later.
From the viewpoint of further improving the penetration resistance of laminated glass, the tensile breaking

energy Y J/mm$^2$ is preferably equal to or greater than (0.043X + 1.43) J/mm$^2$. That is, the interlayer film for laminated glass according to the present invention preferably satisfies the following Expression (ii').

$$Y \geq (0.043X + 1.43)\ J/mm^2 \cdots \text{Expression (ii')}$$

Through experiments, the inventors of the present invention confirmed that the penetration resistance of laminated glass is further improved when the Expression (ii') is satisfied. This can also be understood from examples and comparative examples which will be described later.

The glass transition temperature X°C is preferably equal to or higher than 23°C, more preferably equal to or higher than 25°C, even more preferably equal to or higher than 29°C, still more preferably equal to or higher than 31°C, particularly preferably equal to or higher than 33°C, and most preferably equal to or higher than 35°C. Furthermore, the glass transition temperature X°C is preferably equal to or less than 50°C, more preferably equal to or less than 45°C, even more preferably equal to or less than 43°C, particularly preferably equal to or less than 41°C, and most preferably equal to or less than 40°C. If X is within the above range, the handling of the interlayer film becomes easier.

From the viewpoint of further improving the penetration resistance of laminated glass, the tensile breaking energy Y J/mm$^2$ is preferably equal to or greater than 1.69 J/mm$^2$ and equal to or less than 4 J/mm$^2$.

From the viewpoint of further improving the penetration resistance of laminated glass, both of the two surfaces on both sides of the interlayer film preferably have a glass transition temperature of equal to or higher than 20°C and equal to or less than 50°C. In addition, from the viewpoint of further improving the penetration resistance of laminated glass, both of the two surfaces on both sides of the interlayer film preferably have a glass transition temperature of equal to or higher than 23°C and equal to or less than 40°C.

Examples of a method for making the glass transition temperature and the tensile breaking energy Y J/mm$^2$ satisfy the aforementioned values include 1) a method of increasing the glass transition temperature of the interlayer film, 2) a method of increasing the content of hydroxyl groups of the polyvinyl acetal resin used in the interlayer film (particularly the first layer), 3) a method of decreasing the content of the plasticizer used in the interlayer film (particularly the first layer), 4) a method of increasing an aging temperature at the time of manufacturing the polyvinyl acetal resin used in the interlayer film (particularly the first layer), and the like. If only one of the methods 1) to 3) is used to make the tensile breaking energy Y J/mm$^2$ satisfy the aforementioned values, the interlayer film becomes too hard, and therefore the handling of the interlayer film becomes difficult in some cases. Therefore, it is preferable to combine at least one of the methods 1) to 3) with the method 4).

The tensile breaking energy Y J/mm$^2$ is measured at 23°C by using a tensile tester. Examples of the tensile tester include "Tensilon universal tester" manufactured by ORIENTEC Co., LTD and the like.

Hereinafter, the present invention will be more clearly explained by describing specific embodiments and examples of the present invention with reference to drawings.

Fig. 1 is a partial cross-sectional view schematically showing an interlayer film for laminated glass according to a first reference embodiment not belonging to the present invention.

An interlayer film 1 shown in Fig. 1 is a multilayered interlayer film having a structure (laminated structure) composed of two or more layers. The interlayer film 1 is used for obtaining laminated glass. The interlayer film 1 is an interlayer film for laminated glass. The interlayer film 1 includes a first layer 2, a second layer 3 which is disposed on a first surface 2a of the first layer 2, and a third layer 4 which is disposed on a second surface 2b of the first layer 2 that is opposite to the first surface 2a. The second layer 3 is laminated on the first surface 2a of the first layer 2. The third layer 4 is laminated on the second surface 2b of the first layer 2. The first layer 2 is an intermediate layer. Each of the second layer 3 and the third layer 4 is, for example, a protective layer. In the present embodiment, each of the second layer 3 and the third layer 4 is a surface layer. The first layer 2 is disposed and interposed between the second layer 3 and the third layer 4. Accordingly, the interlayer film 1 has a multilayer structure in which the second layer 3, the first layer 2, and the third layer 4 are laminated on each other in this order.

A surface 3a of the second layer 3 that is opposite to the first layer 2 is preferably a surface on which a laminated glass member is laminated. A surface 4a of the third layer 4 that is opposite to the first layer 2 is preferably a surface on which a laminated glass member is laminated.

Between the first layer 2 and the second layer 3 and between the first layer 2 and the third layer 4, another layer may be disposed. The first layer 2 and the second layer 3 are preferably directly laminated on each other, and the first layer 2 and the third layer 4 are preferably directly laminated on each other. Examples of the aforementioned another layer include a layer containing a thermoplastic resin such as a polyvinyl acetal resin and a layer containing polyethylene terephthalate and the like.

From the viewpoint of further improving the penetration resistance of the laminated glass using the interlayer film, each of the first layer 2, the second layer 3, and the third layer 4 preferably contains a polyvinyl acetal resin and a

plasticizer. Here, the interlayer film 1 contains a polyvinyl acetal resin and a plasticizer. That is, in the interlayer film 1, at least one of the first layer 2, the second layer 3, and the third layer 4 contains a polyvinyl acetal resin.

Fig. 2 is a partial cross-sectional view schematically showing an interlayer film for laminated glass according to a second reference embodiment not belonging to the present invention.

An interlayer film 31 shown in Fig. 2 is a single layered interlayer film having a structure composed of a single layer. The interlayer film 31 is a first layer. The interlayer film 31 is used for obtaining laminated glass. The interlayer film 31 is an interlayer film for laminated glass. From the viewpoint of further improving the penetration resistance of the laminated glass using the interlayer film, the interlayer film 31 contains a polyvinyl acetal resin and a plasticizer.

Fig. 3 is a partial cross-sectional view schematically showing an interlayer film for laminated glass according to the present invention.

An interlayer film 1A shown in Fig. 3 is a multilayered interlayer film having a structure (laminated structure) composed of two or more layers. The interlayer film 1A is used for obtaining laminated glass. The interlayer film 1A is an interlayer film for laminated glass. The interlayer film 1A includes a first layer 2, a second layer 3 which is disposed on a first surface 2a of the first layer 2, and a fourth layer 5 which is disposed on a surface 3a of the second layer 3 that is opposite to the first layer 2. The second layer 3 is laminated on the first surface 2a of the first layer 2. The fourth layer 5 is laminated on the surface 3a of the second layer 3. The second layer 3 is an intermediate layer. Each of the first layer 2 and the fourth layer 5 is, for example, a protective layer. In the present embodiment, each of the first layer 2 and the fourth layer 5 is a surface layer. The second layer 3 is disposed and interposed between the first layer 2 and the fourth layer 5. Accordingly, the interlayer film 1A has a multilayer structure in which the fourth layer 5, the second layer 3, and the first layer 2 are laminated on each other in this order.

A surface 5a of the fourth layer 5 that is opposite to the second layer 3 is preferably a surface on which a laminated glass member is laminated. A surface (second surface) 2b of the first layer 2 that is opposite to the second layer 3 is preferably a surface on which a laminated glass member is laminated.

Between the fourth layer 5 and the second layer 3 and between the second layer 3 and the first layer 2, another layer may be disposed. The fourth layer 5 and the second layer 3 are preferably directly laminated on each other, and the second layer 3 and the first layer 2 are preferably directly laminated on each other. Examples of the aforementioned another layer include a layer containing a thermoplastic resin such as a polyvinyl acetal resin and a layer containing polyethylene terephthalate and the like.

From the viewpoint of further improving the penetration resistance of the laminated glass using the interlayer film, the fourth layer 5 preferably contains a polyvinyl acetal resin and a plasticizer. Here, the interlayer film 1A contains a polyvinyl acetal resin and a plasticizer. That is, in the interlayer film 1A, at least one of the fourth layer 5, the second layer 3, and the first layer 2 contains a polyvinyl acetal resin.

The interlayer film may be a single layered interlayer film composed only of the first layer or may be a multilayered interlayer film for laminated glass including the first layer. Furthermore, the interlayer film may be an interlayer film which includes at least the first layer and the second layer (the interlayer film may or may not include each of the third layer and the fourth layer). In addition, the interlayer film may include the first layer, the second layer, and the third layer. Moreover, the interlayer film may include the first layer, the second layer, and the fourth layer.

In the interlayer film 1, one second layer 3 and one third layer 4 are laminated on both surfaces of the first layer 2 respectively. The second layer should be disposed on the first surface side of the first layer. Furthermore, the second layer may be disposed on the first surface side of the first layer, and the third layer may not be disposed on the second surface side of the first layer. Here, the second layer is preferably disposed on the first surface side of the first layer, and the third layer is preferably disposed on the second surface side of the first layer. If the third layer is disposed on the second surface side of the first layer, the handling of the interlayer film and the penetration resistance of the laminated glass are further improved. The adhesiveness of the surfaces on both sides of the interlayer film with respect to the laminated glass member or the like can be adjusted. When the interlayer film does not have the third layer, the adhesiveness of the outer surface of the second layer of the interlayer film with respect to the laminated glass member can be adjusted.

In the interlayer film 1A, one fourth layer 5 and one first layer 2 are laminated on both surfaces of the second layer 3 respectively. The fourth layer 5 may be a layer which is the same as or similar to the first layer 2. When the first layer is the outermost layer of the interlayer film, the penetration resistance of the interlayer film can be further improved. Furthermore, if the first layer is used as the outermost layer of the interlayer film, the glass transition temperature of the second layer does not need to be increased, and accordingly, an interlayer film having high penetration resistance and high sound insulating properties is obtained.

Hereinafter, the first layer, the second layer, the third layer, and the fourth layer constituting the interlayer film for laminated glass according to the present invention will be specifically described. Furthermore, the components contained in each of the first layer, the second layer, the third layer, and the fourth layer will be specifically described.

(Polyvinyl acetal resin)

The first layer (including a single layered interlayer film) contains a polyvinyl acetal resin (hereinafter, described as a polyvinyl acetal resin (1) in some cases). The second layer contains a polyvinyl acetal resin (hereinafter, described as a polyvinyl acetal resin (2) in some cases). The third layer preferably contains a polyvinyl acetal resin (hereinafter, described as a polyvinyl acetal resin (3) in some cases). The fourth layer contains a polyvinyl acetal resin (hereinafter, described as a polyvinyl acetal resin (4) in some cases). The polyvinyl acetal resin (1), the polyvinyl acetal resin (2), and the polyvinyl acetal resin (3) may be the same as or different from each other. The polyvinyl acetal resin (1), the polyvinyl acetal resin (2), and the polyvinyl acetal resin (4) may be the same as or different from each other. One kind of the polyvinyl acetal resin (1), the polyvinyl acetal resin (2), the polyvinyl acetal resin (3), and the polyvinyl acetal resin (4) may be used singly, or two or more kinds thereof may be used concurrently.

The polyvinyl acetal resin can be manufactured by, for example, acetalizing polyvinyl alcohol by using an aldehyde. The polyvinyl alcohol is obtained by, for example, saponifying polyvinyl acetate. A degree of saponification of the polyvinyl alcohol is generally 70 mol% to 99.9 mol%.

An average degree of polymerization of the polyvinyl alcohol is preferably equal to or greater than 200, more preferably equal to or greater than 500, even more preferably equal to or greater than 1,000, still more preferably equal to or greater than 1,500, and yet more preferably equal to or greater than 1,600. Furthermore, the average degree of polymerization of the polyvinyl alcohol is preferably equal to or less than 3,000, more preferably equal to or less than 2,700, and even more preferably equal to or less than 2,400. If the average degree of polymerization is equal to or greater than the aforementioned lower limit, the penetration resistance of the laminated glass is further improved. Furthermore, if the average degree of polymerization is equal to or less than the aforementioned upper limit, the interlayer film is easily formed.

From the viewpoint of further improving the penetration resistance of the laminated glass, the average degree of polymerization of the polyvinyl alcohol is particularly preferably equal to or greater than 1,500 and equal to or less than 3,000.

The average degree of polymerization of the polyvinyl alcohol is determined by a method based on JIS K6726 "Testing methods for polyvinyl alcohol".

The number of carbon atoms of the acetal groups contained in the polyvinyl acetal resin is not particularly limited. Furthermore, the aldehyde used at the time of manufacturing the polyvinyl acetal resin is not particularly limited. The acetal groups in the polyvinyl acetal resin preferably have 3 to 5 carbon atoms, and more preferably have 3 or 4 carbon atoms. If the acetal groups in the polyvinyl acetal resin have 3 or more carbon atoms, the glass transition temperature of the interlayer film is sufficiently lowered.

The aldehyde is not particularly limited, and generally, aldehydes having 1 to 10 carbon atoms are preferably used. Examples of an aldehyde having 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Among these, propionaldehyde, n-butyraldehyde, isobutyraldehyde, n-hexylaldehyde, and n-valeraldehyde are preferable, propionaldehyde, n-butyraldehyde, and isobutyraldehyde are more preferable, and n-butyraldehyde is even more preferable. One kind of the above aldehydes may be used singly, or two or more kinds thereof may be used concurrently.

The content of hydroxyl groups (amount of hydroxyl groups) in each of the polyvinyl acetal resin (1) and the polyvinyl acetal resin (4) is preferably equal to or greater than 31.5 mol%, more preferably equal to or greater than 32 mol%, and even more preferably equal to or greater than 32.5 mol%. Furthermore, the content of hydroxyl groups is preferably equal to or less than 40 mol%, and more preferably equal to or less than 39 mol%. If the content of hydroxyl groups is equal to or greater than the aforementioned lower limit, the adhesion of the interlayer film is further improved, and the penetration resistance of the laminated glass is further improved. Particularly, if the content of hydroxyl groups of each of the polyvinyl acetal resin (1) and the polyvinyl acetal resin (4) is equal to or greater than 31.5 mol%, the penetration resistance of the laminated glass is effectively improved. In addition, if the content of hydroxyl groups is equal to or less than the aforementioned upper limit, the flexibility of the interlayer film is improved, and the handling of the interlayer film becomes easier. Because the penetration resistance of the laminated glass is further improved, and the handling of the interlayer film becomes much easier, the content of hydroxyl groups (amount of hydroxyl groups) of each of the polyvinyl acetal resin (1) and the polyvinyl acetal resin (4) is preferably equal to or greater than 33.5 mol%, and more preferably equal to or greater than 34 mol%. For the same reason, the content of hydroxyl groups is preferably equal to or less than 38 mol%, more preferably equal to or less than 37 mol%, and even more preferably equal to or less than 36 mol%.

The content of hydroxyl groups of each of the polyvinyl acetal resin (2) and the polyvinyl acetal resin (3) is preferably equal to or greater than 28 mol%, and more preferably equal to or greater than 28.5 mol%. Furthermore, the content of hydroxyl groups is preferably equal to or less than 31 mol%, and more preferably equal to or less than 30.5 mol%. If the content of hydroxyl groups is equal to or greater than the aforementioned lower limit, the adhesion of the

interlayer film is further improved. In addition, if the content of hydroxyl groups is equal to or less than the aforementioned upper limit, the flexibility of the interlayer film is improved, and the handling of the interlayer film becomes easier. When the first layer is the outermost layer of the interlayer film, and the first layer and the second layer are laminated on each other, the content of hydroxyl groups of the polyvinyl acetal resin (2) is preferably equal to or greater than 16 mol%, more preferably equal to or greater than 18 mol%, even more preferably equal to or greater than 20 mol%, and particularly preferably equal to or greater than 22 mol%. Moreover, the content of hydroxyl groups is preferably equal to or less than 31 mol%, more preferably equal to or less than 29 mol%, even more preferably equal to or less than 27 mol%, and particularly preferably equal to or less than 25 mol%. If the content of hydroxyl groups is equal to or greater than the aforementioned lower limit and equal to or less than the aforementioned upper limit, the sound insulating properties of the laminated glass are improved.

From the viewpoint of further improving the penetration resistance of the laminated glass, the content of hydroxyl groups of the polyvinyl acetal resin (1) is preferably greater than the content of hydroxyl groups of the polyvinyl acetal resin (2). Moreover, from the viewpoint of further improving the penetration resistance of the laminated glass, the content of hydroxyl groups of the polyvinyl acetal resin (1) is preferably greater than the content of hydroxyl groups of the polyvinyl acetal resin (3). In addition, from the viewpoint of further improving the penetration resistance of the laminated glass, the content of hydroxyl groups of the polyvinyl acetal resin (4) is preferably greater than the content of hydroxyl groups of the polyvinyl acetal resin (2).

From the viewpoint of further improving the penetration resistance of the laminated glass, each of an absolute value of a difference between the content of hydroxyl groups of the polyvinyl acetal resin (1) and the content of hydroxyl groups of the polyvinyl acetal resin (2), an absolute value of a difference between the content of hydroxyl groups of the polyvinyl acetal resin (1) and the content of hydroxyl groups of the polyvinyl acetal resin (3), and an absolute value of a difference between the content of hydroxyl groups of the polyvinyl acetal resin (4) and the content of hydroxyl groups of the polyvinyl acetal resin (2) is preferably equal to or greater than 0.5 mol%, and more preferably equal to or greater than 1 mol%. Each of the absolute value of a difference between the content of hydroxyl groups of the polyvinyl acetal resin (1) and the content of hydroxyl groups of the polyvinyl acetal resin (2), the absolute value of a difference between the content of hydroxyl groups of the polyvinyl acetal resin (1) and the content of hydroxyl groups of the polyvinyl acetal resin (3), and the absolute value of a difference between the content of hydroxyl groups of the polyvinyl acetal resin (4) and the content of hydroxyl groups of the polyvinyl acetal resin (2) is preferably equal to or less than 8.5 mol%.

From the viewpoint of improving the penetration resistance and the sound insulating properties of the laminated glass, an embodiment is preferable in which the first layer is the outermost layer, and at least the first layer and the second layer are laminated on each other. From the same viewpoint, an embodiment is more preferable in which the first layer is the outermost layer and is laminated on the first surface of the second layer, and the fourth layer is laminated on a surface (second surface) of the second layer that is opposite to the first layer (first surface). Furthermore, from the viewpoint of improving the penetration resistance of the laminated glass and further improving the sound insulating properties of the laminated glass, an embodiment is preferable in which the content of hydroxyl groups of the polyvinyl acetal resin (1) is greater than the content of hydroxyl groups of the polyvinyl acetal resin (2), and the content of hydroxyl groups of the polyvinyl acetal resin (4) is greater than the content of hydroxyl groups of the polyvinyl acetal resin (2). Each of an absolute value of a difference between the content of hydroxyl groups of the polyvinyl acetal resin (1) and the content of hydroxyl groups of the polyvinyl acetal resin (2) and an absolute value of a difference between the content of hydroxyl groups of the polyvinyl acetal resin (4) and the content of hydroxyl groups of the polyvinyl acetal resin (2) is preferably equal to or greater than 5 mol%, more preferably equal to or greater than 7 mol%, even more preferably equal to or greater than 9 mol%, and particularly preferably equal to or greater than 9.5 mol%. Furthermore, each of the absolute value of a difference between the content of hydroxyl groups of the polyvinyl acetal resin (1) and the content of hydroxyl groups of the polyvinyl acetal resin (2) and the absolute value of a difference between the content of hydroxyl groups of the polyvinyl acetal resin (4) and the content of hydroxyl groups of the polyvinyl acetal resin (2) is preferably equal to or less than 15 mol%, more preferably equal to or less than 14 mol%, even more preferably equal to or less than 13 mol%, and particularly preferably equal to or less than 12 mol%. If each of the absolute value of a difference between the content of hydroxyl groups of the polyvinyl acetal resin (1) and the content of hydroxyl groups of the polyvinyl acetal resin (2) and the absolute value of a difference between the content of hydroxyl groups of the polyvinyl acetal resin (4) and the content of hydroxyl groups of the polyvinyl acetal resin (2) is equal to or greater than the aforementioned lower limit, the sound insulating properties of the laminated glass are further improved, and if it is equal to or less than the aforementioned upper limit, the penetration resistance of the laminated glass is further improved.

The content of hydroxyl groups of the polyvinyl acetal resin is a value determined by dividing the amount of an ethylene groups, to which hydroxyl groups are bonded, by the total amount of ethylene groups in a main chain and then expressing the thus obtained molar fraction as a percentage. The amount of ethylene groups to which hydroxyl groups are bonded can be measured and determined based on, for example, JIS K6726 "Testing methods for polyvinyl alcohol".

A degree of acetylation (amount of acetyl groups) of each of the polyvinyl acetal resin (1) and the polyvinyl acetal resin (4) is preferably equal to or greater than 0.3 mol%, more preferably equal to or greater than 0.5 mol%, and

even more preferably equal to or greater than 0.8 mol%. Furthermore, the degree of acetylation is preferably equal to or less than 8 mol%, more preferably equal to or less than 5 mol%, even more preferably equal to or less than 2 mol%, and particularly preferably equal to or less than 1.8 mol%. If the degree of acetylation is equal to or greater than the aforementioned lower limit, the compatibility between the polyvinyl acetal resin and a plasticizer is improved. If the degree of acetylation is equal to or less than the aforementioned upper limit, the mechanical strength of the interlayer film is further improved.

A degree of acetylation of each of the polyvinyl acetal resin (2) and the polyvinyl acetal resin (3) is preferably equal to or greater than 0.3 mol%, and more preferably equal to or greater than 0.5 mol%. Furthermore, the degree of acetylation is preferably equal to or less than 2 mol%, and even more preferably equal to or less than 1.8 mol%. If the degree of acetylation is equal to or greater than the aforementioned lower limit, the compatibility between the polyvinyl acetal resin and a plasticizer is improved. Moreover, if the degree of acetylation is equal to or less than the aforementioned upper limit, the moisture resistance of the interlayer film and the laminated glass is improved. From the viewpoint of improving the penetration resistance and the sound insulating properties of the laminated glass, the degree of acetylation of each of the polyvinyl acetal resin (2) and the polyvinyl acetal resin (3) is preferably greater than 5 mol%, more preferably equal to or greater than 6 mol%, and even more preferably equal to or greater than 7 mol%. From the same viewpoint, the degree of acetylation is preferably equal to or less than 30 mol%, and more preferably equal to or less than 25 mol%.

The degree of acetylation is a value obtained by subtracting the amount of ethylene groups, to which acetal groups are bonded, and the amount of ethylene groups, to which hydroxyl groups are bonded, from the total amount of ethylene groups in a main chain, dividing the thus obtained value by the total amount of ethylene groups in the main chain, and expressing the thus obtained molar fraction as a percentage. The amount of ethylene groups to which acetal groups are bonded can be measured based on, for example, JIS K6728 "Testing methods for polyvinyl butyral".

A degree of acetalization (in a case of a polyvinyl butyral resin, a degree of butyralization) of each of the polyvinyl acetal resin (1) and the polyvinyl acetal resin (4) is preferably equal to or greater than 61.5 mol%, more preferably equal to or greater than 61.7 mol%, and even more preferably equal to or greater than 62 mol%. Furthermore, the degree of acetalization is preferably equal to or less than 68.2 mol%, more preferably equal to or less than 68 mol%, and even more preferably equal to or less than 67 mol%. If the degree of acetalization is equal to or greater than the aforementioned lower limit, the compatibility between the polyvinyl acetal resin and a plasticizer is improved. If the degree of acetalization is equal to or less than the aforementioned upper limit, the reaction time required for manufacturing the polyvinyl acetal resin is shortened. Particularly, if the degree of acetalization of the polyvinyl acetal resin (1) is equal to or less than 68.2 mol%, the penetration resistance of the laminated glass is effectively improved.

A degree of acetalization (in a case of a polyvinyl butyral resin, a degree of butyralization) of each of the polyvinyl acetal resin (2) and the polyvinyl acetal resin (3) is preferably equal to or greater than 67 mol%, and more preferably equal to or greater than 67.2 mol%. Furthermore, the degree of acetalization is preferably equal to or less than 71.7 mol%, and more preferably equal to or less than 71.5 mol%. If the degree of acetalization is equal to or greater than the aforementioned lower limit, the compatibility between the polyvinyl acetal resin and a plasticizer is improved. Moreover, if the degree of acetalization is equal to or less than the aforementioned upper limit, the reaction time required for manufacturing the polyvinyl acetal resin is shortened. From the viewpoint of improving the penetration resistance of the laminated glass and further improving the sound insulating properties of the laminated glass, the degree of acetalization of each of the polyvinyl acetal resin (2) and the polyvinyl acetal resin (3) is preferably greater than 5 mol%, more preferably equal to or greater than 6 mol%, and even more preferably equal to or greater than 7 mol%. From the same viewpoint, the degree of acetalization is preferably equal to or less than 30 mol%, and more preferably equal to or less than 25 mol%.

The degree of acetalization is a value obtained by dividing the amount of ethylene groups, to which acetal groups are bonded, by the total amount of ethylene groups in a main chain and then expressing the thus obtained molar fraction as a percentage. The degree of acetalization can be calculated by a method based on JIS K6728 "Testing methods for polyvinyl butyral".

The content of hydroxyl groups (amount of hydroxyl groups), the degree of acetalization (degree of butyralization), and the degree of acetylation are preferably calculated from the results measured by a method based on JIS K6728 "Testing methods for polyvinyl butyral". Here, the measurement based on ASTM D1396-92 JIS K6728 may be used. When the polyvinyl acetal resin is a polyvinyl butyral resin, the content of hydroxyl groups (amount of hydroxyl groups), the degree of acetalization (degree of butyralization), and the degree of acetylation can be calculated from the results measured by a method based on JIS K6728 "Testing methods for polyvinyl butyral".

Because the penetration resistance of the laminated glass is further improved, the degree of acetylation of the polyvinyl acetal resin (1) and the polyvinyl acetal resin (4) is preferably less than 5 mol%. For the same reason, an embodiment is more preferable in which the degree of acetylation of the polyvinyl acetal resin (1) and the polyvinyl acetal resin (4) is less than 5 mol%, and the content of hydroxyl groups of the polyvinyl acetal resin (1) and the polyvinyl acetal resin (4) is equal to or greater than 20 mol% and equal to or less than 40 mol%. For the same reason, an embodiment is even more preferable in which the degree of acetylation of the polyvinyl acetal resin (1) and the polyvinyl acetal resin (4) is equal to or less than 3 mol%, and the content of hydroxyl groups of the polyvinyl acetal resin (1) and the polyvinyl

acetal resin (4) is equal to or greater than 20 mol% and equal to or less than 40 mol%. For the same reason, an embodiment is particularly preferable in which the degree of acetylation of the polyvinyl acetal resin (1) and the polyvinyl acetal resin (4) is equal to or less than 3 mol%, and the content of hydroxyl groups of the polyvinyl acetal resin (1) and the polyvinyl acetal resin (4) is equal to or greater than 25 mol% and equal to or less than 35 mol%.

Because the penetration resistance of the laminated glass is further improved, each of the polyvinyl acetal resin (2) and the polyvinyl acetal resin (3) is preferably a polyvinyl acetal resin (B1) which has a degree of acetylation of equal to or greater than 5 mol%, a polyvinyl acetal resin (B2) which has a degree of acetalization of equal to or greater than 68 mol%, or a polyvinyl acetal resin (B3) which is obtained by acetalizing the aforementioned polyvinyl alcohol by using an aldehyde having 6 or more carbon atoms.

Because the degree of acetylation of the polyvinyl acetal resin (B1) is equal to or greater than 5 mol%, a layer containing the polyvinyl acetal resin (B) is likely to contain more plasticizer. Therefore, the glass transition temperature of the interlayer film is sufficiently lowered. The degree of acetylation of the polyvinyl acetal resin (B1) is more preferably equal to or greater than 7 mol%, even more preferably equal to or greater than 10 mol%, and particularly preferably equal to or greater than 12 mol%. Furthermore, the degree of acetylation is preferably equal to or less than 30 mol%, more preferably equal to or less than 28 mol%, even more preferably equal to or less than 26 mol%, and particularly preferably equal to or less than 24 mol%. If the degree of acetylation is equal to or greater than the aforementioned lower limit and equal to or less than the aforementioned upper limit, the sound insulating properties of the laminated glass are further improved.

Because the degree of acetalization of the polyvinyl acetal resin (B2) is equal to or greater than 68 mol%, a layer containing the polyvinyl acetal resin (B2) is likely to contain more plasticizer. Therefore, the glass transition temperature of the interlayer film is sufficiently lowered. The degree of acetalization of the polyvinyl acetal resin (B2) is more preferably equal to or greater than 70 mol%, even more preferably equal to or greater than 72 mol%, particularly preferably equal to or greater than 74 mol%, and most preferably equal to or greater than 76 mol%. Furthermore, the degree of acetalization is preferably equal to or less than 88 mol%, more preferably equal to or less than 86 mol%, even more preferably equal to or less than 84 mol%, and particularly preferably equal to or less than 82 mol%. If the degree of acetalization is equal to or greater than the aforementioned lower limit and equal to or less than the aforementioned upper limit, the sound insulating properties of the laminated glass are further improved.

The polyvinyl acetal resin (B3) is obtained by acetalizing the aforementioned polyvinyl alcohol by using an aldehyde having 6 or more carbon atoms. Therefore, the glass transition temperature of the interlayer film including a layer containing the polyvinyl acetal resin (B3) can be easily lowered. Examples of the aldehyde having 6 or more carbon atoms include 2-ethylbutyraldehyde, n-hexylaldehyde, n-octylaldehyde, n-nonylaldehyde, n-decylaldehyde, and the like, and these are preferably used.

(Plasticizer)

The first layer (including a single layered interlayer film) contains a plasticizer (hereinafter, described as a plasticizer (1) in some cases). The second layer contains a plasticizer (hereinafter, described as a plasticizer (2) in some cases). The third layer preferably contains a plasticizer (hereinafter, described as a plasticizer (3) in some cases). The fourth layer contains a plasticizer (hereinafter, described as a plasticizer (4) in some cases). If the polyvinyl acetal resin and the plasticizer are concurrently used, the adhesion of the layer containing the polyvinyl acetal resin and the plasticizer with respect to the laminated glass member or other layers is appropriately improved. The plasticizer is not particularly limited. The plasticizer (1), the plasticizer (2), the plasticizer (3), and the plasticizer (4) may be the same as or different from each other. One kind of plasticizer may be used singly, or two or more kinds thereof may be used concurrently.

Examples of the plasticizer include an organic ester plasticizer such as a monobasic organic acid ester and a polybasic organic acid ester, an organic phosphoric acid plasticizer such as an organic phosphoric acid plasticizer and an organic phosphorus acid plasticizer, and the like. Among these, an organic ester plasticizer is preferable. The plasticizer is preferably a liquid plasticizer.

Examples of the monobasic organic acid ester include glycol esters, which are obtained by a reaction between a glycol and a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptylic acid, n-octylic acid, 2-ethylhexylic acid, n-nonylic acid, decylic acid, and the like.

Examples of the polybasic organic acid ester include an ester compound of a polybasic organic acid and an alcohol having 4 to 8 carbon atoms that has a linear or branched structure, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate,

diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, an oil-modified alkyd sebacate, a mixture of a phosphoric acid ester and an adipic acid ester, and the like. Organic ester plasticizers other than these may be used, and adipic acid esters other than the aforementioned adipic acid esters may be used.

Examples of the organic phosphoric acid plasticizer include tributoxyethyl phosphate, isodecylphenyl phosphate, triisopropyl phosphate, and the like.

The aforementioned plasticizer is preferably a diester plasticizer represented by the following Formula (1).

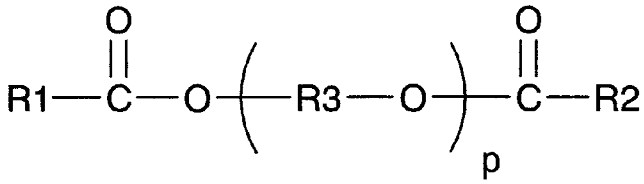

Formula (1)

In Formula (1), each of R1 and R2 represents an organic group having 2 to 10 carbon atoms; R3 represents an ethylene group, an isopropylene group, or a n-propylene group; and p represents an integer of 3 to 10. Each of R1 and R2 in Formula (1) is preferably an organic group having 5 to 10 carbon atoms, and more preferably an organic group having 6 to 10 carbon atoms.

The plasticizer is preferably triethylene glycol di-2-ethylhexanoate (3GO), triethylene glycol di-2-ethylbutyrate (3GH), or triethylene glycol di-2-ethylpropanoate, more preferably triethylene glycol di-2-ethylhexanoate or triethylene glycol di-2-ethylbutyrate, and even more preferably triethylene glycol di-2-ethylhexanoate.

Each of the content of the plasticizer (1) (hereinafter, described as a content (1) in some cases) with respect to 100 parts by weight of the polyvinyl acetal resin (1) and the content of the plasticizer (4) (hereinafter, described as a content (4) in some cases) with respect to 100 parts by weight of the polyvinyl acetal resin (4) is preferably equal to or greater than 20 parts by weight, and more preferably equal to or greater than 25 parts by weight. Furthermore, each of the content (1) and the content (4) is preferably equal to or less than 35 parts by weight, and more preferably equal to or less than 30 parts by weight. If each of the content (1) and the content (4) is equal to or greater than the aforementioned lower limit, the flexibility of the interlayer film is improved, and the handling of the interlayer film becomes easy. Furthermore, if each of the content (1) and the content (4) is equal to or less than the aforementioned upper limit, the transparency of the interlayer film is further improved, and the penetration resistance of the laminated glass is further improved. Particularly, if each of the content (1) and the content (4) is equal to or less than 35 parts by weight, the penetration resistance of the laminated glass is effectively improved.

Each of the content of the plasticizer (2) (hereinafter, described as a content (2) in some cases) with respect to 100 parts by weight of the polyvinyl acetal resin (2) and the content of the plasticizer (3) (hereinafter, described as a content (3) in some cases) with respect to 100 parts by weight of the polyvinyl acetal resin (3) is preferably equal to or greater than 37 parts by weight, and more preferably equal to or greater than 38 parts by weight. Furthermore, each of the content (2) and the content (3) is preferably equal to or less than 42 parts by weight, and more preferably equal to or less than 41 parts by weight. If each of the content (2) and the content (3) is equal to or greater than the aforementioned lower limit, the flexibility of the interlayer film is improved, and the handling of the interlayer film becomes easy. If each of the content (2) and the content (3) is equal to or less than the aforementioned upper limit, the penetration resistance of the laminated glass is further improved. Because the sound insulating properties of the laminated glass can be improved, each of the content (2) and the content (3) is preferably equal to or greater than 50 parts by weight, more preferably equal to or greater than 55 parts by weight, particularly preferably equal to or greater than 60 parts by weight, and most preferably equal to or greater than 65 parts by weight. For the same reason, each of the content (2) and the content (3) is preferably equal to or less than 100 parts by weight, more preferably equal to or less than 90 parts by mass, particularly preferably equal to or less than 85 parts by weight, and most preferably equal to or less than 80 parts by weight.

From the viewpoint of improving the penetration resistance of the laminated glass, the content (1) is preferably smaller than the content (2). In addition, from the viewpoint of improving the penetration resistance of the laminated glass, the content (4) is smaller than the content (2). Moreover, from the viewpoint of improving the penetration resistance of the laminated glass, the content (1) is preferably smaller than the content (3).

From the viewpoint of further improving the penetration resistance of the laminated glass, each of an absolute value of a difference between the content (1) and the content (2), an absolute value of a difference between the content (1) and the content (3), and an absolute value of a difference between the content (4) and the content (2) is preferably

equal to or greater than 2 parts by weight, more preferably equal to or greater than 5 parts by weight, and even more preferably equal to or greater than 8 parts by weight. Each of the absolute value of a difference between the content (1) and the content (2), the absolute value of a difference between the content (1) and the content (3), and the absolute value of a difference between the content (4) and the content (2) is preferably equal to or less than 40 parts by weight, more preferably equal to or less than 30 parts by weight, particularly preferably equal to or less than 25 parts by weight, and most preferably equal to or less than 22 parts by weight.

(Other components)

If necessary, each of the first layer, the second layer, the third layer, and the fourth layer may contain additives such as an antioxidant, an ultraviolet ray shielding agent, a light stabilizer, a flame retardant, an antistatic agent, a pigment, a dye, an adhesion adjuster, a moisture proofing agent, a fluorescent whitening agent, and an infrared absorber. One kind of these additives may be used singly, or two or more kinds thereof may be used concurrently.

(Other details of interlayer film for laminated glass)

The thickness of the interlayer film for laminated glass according to the present invention is not particularly limited. From the viewpoint of the practical use and from the viewpoint of sufficiently improving the heat insulating properties, the thickness of the interlayer film is preferably equal to or greater than 0.1 mm, and more preferably equal to or greater than 0.25 mm. From the same viewpoints, the thickness of the interlayer film is preferably equal to or less than 3 mm, and more preferably equal to or less than 1.5 mm. If the thickness of the interlayer film is equal to or greater than the aforementioned lower limit, the penetration resistance of the laminated glass is improved. Furthermore, if the thickness of the interlayer film is equal to or less than the aforementioned upper limit, the transparency of the interlayer film is further improved.

In the interlayer film for laminated glass according to the present invention, even if the interlayer film has a small thickness, the penetration resistance can be improved. Furthermore, the thinner the interlayer film is, the lighter the laminated glass can become. From the viewpoint of further lightening the laminated glass while maintaining the penetration resistance at a high level, the thickness of the interlayer film is preferably equal to or less than 700 μm, and more preferably equal to or less than 600 μm.

The thickness of the interlayer film is denoted by T. From the viewpoint of further improving the penetration resistance of the laminated glass, the thickness of each of the first layer and the fourth layer is preferably equal to or greater than 0.14T, and more preferably equal to or greater than 0.16T. From the same viewpoint, the thickness of each of the first layer and the fourth layer is preferably equal to or less than 0.72T, and more preferably equal to or less than 0.67T.

From the viewpoint of further improving the penetration resistance of the laminated glass, when the interlayer film includes the fourth layer and the first layer, the total thickness of the fourth layer and the first layer is preferably equal to or greater than 0.8T, and more preferably equal to or greater than 0.84T. From the same viewpoint, the total thickness of the fourth layer and the first layer is preferably equal to or less than 0.96T, and more preferably equal to or less than 0.94T.

From the viewpoint of improving the flexibility of the interlayer film such that the handling of the interlayer film becomes easy, the thickness of each of the second layer and the third layer is preferably equal to or greater than 0.14T, and more preferably equal to or greater than 0.16T. From the same viewpoint, the thickness of each of the second layer and the third layer is preferably equal to or less than 0.43T, and more preferably equal to or less than 0.42T. If the thickness of each of the second layer and the third layer is equal to or greater than the aforementioned lower limit and equal to or less than the aforementioned upper limit, the bleed-out of the plasticizer can be inhibited.

From the viewpoint of further improving the penetration resistance of the laminated glass, when the interlayer film has the second layer and the third layer, the total thickness of the second layer and the third layer is preferably equal to or greater than 0.28T, and more preferably equal to or greater than 0.33T. From the same viewpoint, the total thickness of the second layer and the third layer is preferably equal to or less than 0.86T, and more preferably equal to or less than 0.84T. If the total thickness of the second layer and the third layer is equal to or greater than the aforementioned lower limit and equal to or less than the aforementioned upper limit, the bleed-out of the plasticizer can be inhibited.

The manufacturing method of the interlayer film for laminated glass according to the present invention is not particularly limited. Examples of the manufacturing method include a method of forming layers by using resin compositions for forming the respective layers and then laminating the respective layers on each other for example, a method of co-extruding resin compositions for forming layers by using an extruder such that the respective layers are laminated on each other, and the like. It is preferable to use a manufacturing method using extrusion molding because such a method is suited for continuous production.

Because the manufacturing efficiency of the interlayer film becomes excellent, an embodiment is preferable in

which the second layer and the third layer contain the same polyvinyl acetal resin; an embodiment is more preferable in which the second layer and the third layer contain the same polyvinyl acetal resin and the same plasticizer; and an embodiment is even more preferable in which the second layer and the third layer are formed of the same resin composition. Furthermore, because the manufacturing efficiency of the interlayer film becomes excellent, an embodiment is preferable in which the fourth layer and the first layer contain the same polyvinyl acetal resin; an embodiment is more preferable in which the fourth layer and the first layer contain the same polyvinyl acetal resin and the same plasticizer; and an embodiment is even more preferable in which the fourth layer and the first layer are formed of the same resin composition.

(Laminated glass)

Fig. 3 is a cross-sectional view schematically showing an example of laminated glass using the interlayer film for laminated glass according to the first embodiment of the present invention.

The laminated glass 11 shown in Fig. 3 includes a first laminated glass member 21, a second laminated glass member 22, and the interlayer film 1. The interlayer film 1 is disposed and interposed between the first laminated glass member 21 and the second laminated glass member 22.

The first laminated glass member 21 is laminated on the first surface 1a of the interlayer film 1. The second laminated glass member 22 is laminated on the second surface 1b of the interlayer film 1 that is opposite to the first surface 1a. The first laminated glass member 21 is laminated on the outer surface 3a of the second layer 3 of the interlayer film 1. The second laminated glass member 22 is laminated on the outer surface 4a of the third layer 4 of the interlayer film 1.

As described above, the laminated glass according to the present invention includes the first laminated glass member, the second laminated glass member, and the interlayer film which is disposed between the first laminated glass member and the second laminated glass member. The aforementioned interlayer film is the interlayer film for laminated glass of the present invention.

Examples of the laminated glass member include a glass plate, a polyethylene terephthalate (PET) film, and the like. The laminated glass includes not only the laminated glass in which the interlayer film is interposed between two sheets of glass plate but also the laminated glass in which the interlayer film is interposed between a glass plate and a PET film. The laminated glass is a laminate having a glass plate, and it is preferable that at least one sheet of glass plate is used in the laminated glass. Each of the first laminated glass member and the second laminated glass member is a glass plate or a PET film. It is preferable that the laminated glass has a glass plate as at least either the first laminated glass member or the second laminated glass member.

Examples of the glass plate include inorganic glass and organic glass. Examples of the inorganic glass include float plate glass, heat ray-absorbing plate glass, heat ray-reflecting plate glass, polished plate glass, figured glass, net-inserted plate glass, wired plate glass, and the like. The organic glass is synthetic resin glass used as a substitute for inorganic glass. Examples of the organic glass include a polycarbonate plate, a poly(meth)acryl resin plate, and the like. Examples of the poly(meth)acryl resin plate include a polymethyl (meth)acrylate plate and the like.

The thickness of the laminated glass member is preferably equal to or greater than 1 mm. Furthermore, the thickness of the laminated glass member is preferably equal to or less than 5 mm, and more preferably equal to or less than 3 mm. When the laminated glass member is a glass plate, the thickness of the glass plate is preferably equal to or greater than 1 mm. In addition, the thickness of the glass plate is preferably equal to or less than 5 mm, and more preferably equal to or less than 3 mm. When the laminated glass member is a PET film, the thickness of the PET film is preferably equal to or greater than 0.03 mm and equal to or less than 0.5 mm.

The manufacturing method of the laminated glass is not particularly limited. For example, the interlayer film is interposed between the first laminated glass member and the second laminated glass member, and the resultant is passed between pressing rollers or subjected to aspiration under reduced pressure by being put into a rubber bag, such that the residual air between the first laminated glass member, the second laminated glass member, and the interlayer film is removed. Thereafter, by performing preliminary adhesion on the resultant at a temperature of about 70°C to 110°C, a laminate is obtained. Subsequently, by being put into an autoclave or being pressed, the laminate is pressure-bonded at a temperature of about 120°C to 150°C and a pressure of 1 MPa to 1.5 MPa. In this way, the laminated glass can be obtained.

The interlayer film and the laminated glass can be used in automobiles, railroad vehicles, airplanes, ships, buildings, and the like. Furthermore, the interlayer film and the laminated glass can be used for a purpose other than the above. The interlayer film and the laminated glass are preferably an interlayer film and laminated glass for vehicles or buildings, more preferably an interlayer film and laminated glass for vehicles. The interlayer film and the laminated glass can be used in front glass, side glass, rear glass, roof glass, or the like of automobiles. The interlayer film and the laminated glass are preferably used in automobiles.

Hereinafter, the present invention will be more specifically described by using examples, but the present invention is not limited to the examples.

The degree of butyralization (degree of acetalization), the degree of acetylation, and the content of hydroxyl groups of polyvinyl butyral (PVB) resins used in the following examples and comparative examples were measured by a method based on JIS K6728 "Testing methods for polyvinyl butyral". Herein, when the aforementioned parameters were measured based on ASTM D1396-92, the same numerical values as those obtained by a method based on JIS K6728 "Testing methods for polyvinyl butyral" were also exhibited.

(Synthesis example 1)

Synthesis of polyvinyl acetal resin A (PVB resin):

2,700 ml of deionized water and 300 g of polyvinyl alcohol, which had an average degree of polymerization of 1,700 and a degree of saponification of 99.1 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 17°C, and then while the solution was being stirred, 154 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 60°C and then aged for 2 hours at 66°C. Subsequently, the solution was cooled and neutralized, and then the polyvinyl butyral resin was washed with water and dried, thereby obtaining a polyvinyl acetal resin A.

In the obtained polyvinyl acetal resin A, an average degree of polymerization of polyvinyl alcohol (PVA) was 1,700; a content of hydroxyl groups was 34.4 mol%; a degree of acetylation was 0.8 mol%; a degree of acetalization (degree of butyralization) was 64.8 mol%; and a half-band width was 274.8 $cm^{-1}$.

(Synthesis example 2)

Synthesis of polyvinyl acetal resin B (PVB resin):

2,700 ml of deionized water and 300 g of polyvinyl alcohol, which had an average degree of polymerization of 1,700 and a degree of saponification of 99.1 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 17°C, and then while the solution was being stirred, 165 g of n-butyraldehyde was added thereto. As a result, a polyvinyl butyral resin in the form of white particles was precipitated. 20 minutes after the resin was precipitated, 240 g of 35.5% by weight hydrochloric acid was added thereto, and the solution was heated to 55°C and then aged for 2 hours at 58°C. Subsequently, the solution was cooled and neutralized, and then the polyvinyl butyral resin was washed with water and dried, thereby obtaining a polyvinyl acetal resin B.

The polyvinyl acetal resins B used in Examples 1 to 4 and Comparative example 1 were separately synthesized on different days. In each of the polyvinyl acetal resins B used in Examples 1 to 4 and Comparative example 1, an average degree of polymerization of polyvinyl alcohol (PVA) was 1,700; a content of hydroxyl groups was 30.0 mol%; a degree of acetylation was 0.9 mol%; a degree of acetalization (degree of butyralization) was 69.1 mol%; and a half-band width was 239.3 $cm^{-1}$. Here, the glass transition temperature of each of the polyvinyl acetal resins B used in Examples 1 to 4 and Comparative example 1 equaled the value shown in Table 2.

(Synthesis example 3)

Synthesis of polyvinyl acetal resin C (PVB resin):

2,700 ml of deionized water and 300 g of polyvinyl alcohol, which had an average degree of polymerization of 1,700 and a degree of saponification of 99.3 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 161.2 g of n-butyraldehyde was added thereto. As a result, a polyvinyl butyral resin in the form of white particles was precipitated. 20 minutes after the resin was precipitated, 173 g of 35.5% by weight hydrochloric acid was added thereto, and the solution was heated to 57°C and then aged for 2 hours at 60°C. Subsequently, the solution was cooled and neutralized, and then the polyvinyl butyral resin was washed with water and dried, thereby obtaining a polyvinyl acetal resin C.

(Synthesis example 4)

Synthesis of polyvinyl acetal resin D (PVB resin):

2,700 ml of deionized water and 300 g of polyvinyl alcohol, which had an average degree of polymerization of 1,700 and a degree of saponification of 99.1 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 159 g of n-butyraldehyde was added thereto. As a result, a polyvinyl butyral resin in the form of white particles was precipitated. 20 minutes after the resin was precipitated, 173 g of 35.5% by weight hydrochloric acid was added thereto, and the solution was heated to 57°C and then aged for 2 hours at 63°C. Subsequently, the solution was cooled and neutralized, and then the polyvinyl butyral resin was washed with water and dried, thereby obtaining a polyvinyl acetal resin D.

(Synthesis example 5)

Synthesis of polyvinyl acetal resin E (PVB resin):

2,700 ml of deionized water and 300 g of polyvinyl alcohol, which had an average degree of polymerization of 1,700 and a degree of saponification of 99.2 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 159 g of n-butyraldehyde was added thereto. As a result, a polyvinyl butyral resin in the form of white particles was precipitated. 20 minutes after the resin was precipitated, 173 g of 35.5% by weight hydrochloric acid was added thereto, and the solution was heated to 60°C and then aged for 2 hours at 66°C. Subsequently, the solution was cooled and neutralized, and then the polyvinyl butyral resin was washed with water and dried, thereby obtaining a polyvinyl acetal resin E.

(Synthesis example 6)

Synthesis of polyvinyl acetal resin F (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 163 g of n-butyraldehyde was added thereto. As a result, a polyvinyl butyral resin in the form of white particles was precipitated. 20 minutes after the resin was precipitated, 173 g of 35.5% by weight hydrochloric acid was added thereto, and the solution was heated to 57°C and then aged for 2 hours at 63°C. Subsequently, the solution was cooled and neutralized, and then the polyvinyl butyral resin was washed with water and dried, thereby obtaining a polyvinyl acetal resin F.

(Synthesis example 7)

Synthesis of polyvinyl acetal resin G (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 154 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 60°C and then aged for 2 hours at 66°C. Subsequently, the solution was cooled and neutralized, and then the polyvinyl butyral resin was washed with water and dried, thereby obtaining a polyvinyl acetal resin G.

(Synthesis example 8)

Synthesis of polyvinyl acetal resin H (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 160 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 57°C and then aged for 2 hours at 63°C. Subsequently, the solution was cooled and neutralized, and then the polyvinyl butyral resin was washed with water and dried, thereby obtaining a polyvinyl acetal resin H.

(Synthesis example 9)

Synthesis of polyvinyl acetal resin I (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 161 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 57°C and then aged for 2 hours at 63°C. Subsequently, the solution was cooled and neutralized, and then the polyvinyl butyral resin was washed with water and dried, thereby obtaining a polyvinyl acetal resin I.

(Synthesis example 10)

Synthesis of polyvinyl acetal resin J (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 155 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 60°C and then aged for 2 hours at 66°C. Subsequently, the solution was cooled and neutralized, and then the polyvinyl butyral resin was washed with water and dried, thereby obtaining a polyvinyl acetal resin J.

(Synthesis example 11)

Synthesis of polyvinyl acetal resin K (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 158 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 60°C and then aged for 2 hours at 66°C. Subsequently, the solution was cooled and neutralized, and then the polyvinyl butyral resin was washed with water and dried, thereby obtaining a polyvinyl acetal resin K.

(Synthesis example 12)

Synthesis of polyvinyl acetal resin L (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 169 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 57°C and then aged for 2 hours at 63°C. Subsequently, the solution was cooled and neutralized, and then the polyvinyl butyral resin was washed with water and dried, thereby obtaining a polyvinyl acetal resin L.

(Synthesis example 13)

Synthesis of polyvinyl acetal resin M (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 163 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 54°C and then aged for 2 hours at 60°C. Subsequently, the solution was cooled and neutralized, and then the polyvinyl butyral resin was washed with water and dried, thereby obtaining a polyvinyl acetal resin M.

(Synthesis example 14)

Synthesis of polyvinyl acetal resin N (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 161 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 40°C and then aged for 3 hours at 45°C. Subsequently, the solution was cooled and neutralized, and then the polyvinyl butyral resin was washed with water and dried, thereby obtaining a polyvinyl acetal resin N.

(Synthesis example 15)

Synthesis of polyvinyl acetal resin O (PVB resin):

2,700 ml of deionized water and 300 g of polyvinyl alcohol, which had an average degree of polymerization of 1,700 and a degree of saponification of 99.0 mol%, were put into a reactor equipped with a stirrer, and dissolution was performed with heating and stirring, thereby obtaining a solution. Thereafter, as a catalyst, 21 g of 35.5% by weight hydrochloric acid was added to the solution, the temperature of the solution was adjusted to be 14°C, and then while the solution was being stirred, 160 g of n-butyraldehyde was added thereto. As a result, a polyvinyl butyral resin in the form of white particles was precipitated. 20 minutes after the resin was precipitated, 172 g of 35.5% by weight hydrochloric acid was added thereto, and the solution was heated to 40°C and then aged for 3 hours at 46°C. Subsequently, the solution was cooled and neutralized, and then the polyvinyl butyral resin was washed with water and dried, thereby obtaining a polyvinyl acetal resin O.

(Synthesis example 16)

Synthesis of polyvinyl acetal resin P (PVB resin):

3,314 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 163.7 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin P.

(Synthesis example 17)

Synthesis of polyvinyl acetal resin Q (PVB resin):

3,288 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 176.7 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin Q.

(Synthesis example 18)

Synthesis of polyvinyl acetal resin R (PVB resin):

3,279 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 181.5 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin R.

(Synthesis example 19)

Synthesis of polyvinyl acetal resin S (PVB resin):

3,244 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 199 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 65°C and then aged for 2 hours at 67.5°C. Subsequently, the solution was cooled and neutralized, and then the polyvinyl butyral resin was washed with water and dried, thereby obtaining a polyvinyl acetal resin S.

(Synthesis example 20)

Synthesis of polyvinyl acetal resin T (PVB resin):

3,299 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 171.3 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin T.

(Synthesis example 21)

Synthesis of polyvinyl acetal resin U (PVB resin):

3,279 ml of deionized water and 300 g of polyvinyl alcohol, which had an average degree of polymerization of 1,700 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 8°C, and then while the solution was being stirred, 181.5 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin U.

(Synthesis example 22)

Synthesis of polyvinyl acetal resin V (PVB resin):

3,279 ml of deionized water and 300 g of polyvinyl alcohol, which had an average degree of polymerization of 2,300 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 181.5 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin V.

(Synthesis example 23)

Synthesis of polyvinyl acetal resin W (PVB resin):

2,418 ml of deionized water and 300 g of polyvinyl alcohol, which had an average degree of polymerization of 1,700 and a degree of saponification of 98.5 mol%, were put into a reactor equipped with a stirrer, and dissolution was performed with heating and stirring, thereby obtaining a solution. Thereafter, as a catalyst, 24.9 g of 60% by weight nitric acid was added to the solution, the temperature of the solution was adjusted to be 8°C, and then while the solution was being stirred, 174.9 g of n-butyraldehyde was added thereto. As a result, a polyvinyl butyral resin in the form of white particles was precipitated. 20 minutes after the resin was precipitated, 105.8 g of 60% by weight nitric acid was added thereto, and the solution was heated to 55°C and then aged for 2 hours at 58°C. Subsequently, the solution was cooled and neutralized, and then the polyvinyl butyral resin was washed with water and dried, thereby obtaining a polyvinyl acetal resin W.

(Synthesis example 24)

Synthesis of polyvinyl acetal resin X (PVB resin):

3,744 ml of deionized water and 300 g of polyvinyl alcohol, which had an average degree of polymerization of 1,700 and a degree of saponification of 93.8 mol%, were put into a reactor equipped with a stirrer, and dissolution was performed with heating and stirring, thereby obtaining a solution. Thereafter, as a catalyst, 47 g of 60% by weight nitric acid was added to the solution, the temperature of the solution was adjusted to be 8°C, and then while the solution was being stirred, 199.8 g of n-butyraldehyde was added thereto. As a result, a polyvinyl butyral resin in the form of white particles was precipitated. 20 minutes after the resin was precipitated, 140.3 g of 60% by weight nitric acid was added thereto, and the solution was heated to 65°C and then aged for 2 hours at 67.5°C. Subsequently, the solution was cooled and neutralized, and then the polyvinyl butyral resin was washed with water and dried, thereby obtaining a polyvinyl acetal resin X.

(Synthesis example 25)

Synthesis of polyvinyl acetal resin Y (PVB resin):

2,418 ml of deionized water and 300 g of polyvinyl alcohol, which had an average degree of polymerization of 2,300 and a degree of saponification of 98.5 mol%, were put into a reactor equipped with a stirrer, and dissolution was performed with heating and stirring, thereby obtaining a solution. Thereafter, as a catalyst, 24.9 g of 60% by weight nitric acid was added to the solution, the temperature of the solution was adjusted to be 10°C, and then while the solution was being stirred, 174.9 g of n-butyraldehyde was added thereto. As a result, a polyvinyl butyral resin in the form of white particles was precipitated. 20 minutes after the resin was precipitated, 105.8 g of 60% by weight nitric acid was added thereto, and the solution was heated to 55°C and then aged for 2 hours at 58°C. Subsequently, the solution was cooled and neutralized, and then the polyvinyl butyral resin was washed with water and dried, thereby obtaining a polyvinyl acetal resin Y.

(Synthesis example 26)

Synthesis of polyvinyl acetal resin Z (PVB resin):

3,744 ml of deionized water and 300 g of polyvinyl alcohol, which had an average degree of polymerization of 2,300 and a degree of saponification of 93.8 mol%, were put into a reactor equipped with a stirrer, and dissolution was performed with heating and stirring, thereby obtaining a solution. Thereafter, as a catalyst, 47 g of 60% by weight nitric acid was added to the solution, the temperature of the solution was adjusted to be 10°C, and then while the solution was being stirred, 199.8 g of n-butyraldehyde was added thereto. As a result, a polyvinyl butyral resin in the form of white particles was precipitated. 20 minutes after the resin was precipitated, 140.3 g of 60% by weight nitric acid was added thereto, and the solution was heated to 65°C and then aged for 2 hours at 67.5°C. Subsequently, the solution was cooled and neutralized, and then the polyvinyl butyral resin was washed with water and dried, thereby obtaining a polyvinyl acetal resin Z.

(Synthesis example 27)

Synthesis of polyvinyl acetal resin AA (PVB resin):

3,294 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 173.9 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin AA.

(Synthesis example 28)

Synthesis of polyvinyl acetal resin AB (PVB resin):

3,267 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 187.1 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin AB.

(Synthesis example 29)

Synthesis of polyvinyl acetal resin AC (PVB resin):

3,285 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 178.4 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin AC.

(Synthesis example 30)

Synthesis of polyvinyl acetal resin AD (PVB resin):

3,523 ml of deionized water and 300 g of polyvinyl alcohol, which had an average degree of polymerization of 3,000 and a degree of saponification of 75.0 mol%, were put into a reactor equipped with a stirrer, and dissolution was performed with heating and stirring, thereby obtaining a solution. Thereafter, as a catalyst, 45.5 g of 60% by weight nitric acid was added to the solution, the temperature of the solution was adjusted to be 10°C, and then while the solution was being stirred, 145.9 g of n-butyraldehyde was added thereto. As a result, a polyvinyl butyral resin in the form of white particles was precipitated. 20 minutes after the resin was precipitated, 145.3 g of 60% by weight nitric acid was added thereto, and the solution was heated to 60°C and then aged for 2 hours at 62.5°C. Subsequently, the solution was cooled and neutralized, and then the polyvinyl butyral resin was washed with water and dried, thereby obtaining a polyvinyl acetal resin AD.

(Synthesis example 31)

Synthesis of polyvinyl acetal resin AE (PVB resin):

4,440 ml of deionized water and 300 g of polyvinyl alcohol, which had an average degree of polymerization of 3,000 and a degree of saponification of 85.8 mol%, were put into a reactor equipped with a stirrer, and dissolution was performed with heating and stirring, thereby obtaining a solution. Thereafter, as a catalyst, 50.2 g of 60% by weight nitric acid was added to the solution, the temperature of the solution was adjusted to be 10°C, and then while the solution was being stirred, 165.8 g of n-butyraldehyde was added thereto. As a result, a polyvinyl butyral resin in the form of white particles was precipitated. 20 minutes after the resin was precipitated, 197.8 g of 60% by weight nitric acid was added thereto, and the solution was heated to 65°C and then aged for 2 hours at 67.5°C. Subsequently, the solution was cooled and neutralized, and then the polyvinyl butyral resin was washed with water and dried, thereby obtaining a polyvinyl acetal resin AE.

(Synthesis example 32)

Synthesis of polyvinyl acetal resin AF (PVB resin):

4,435 ml of deionized water and 300 g of polyvinyl alcohol, which had an average degree of polymerization of 3,000 and a degree of saponification of 82.7 mol%, were put into a reactor equipped with a stirrer, and dissolution was performed with heating and stirring, thereby obtaining a solution. Thereafter, as a catalyst, 50.2 g of 60% by weight nitric acid was added to the solution, the temperature of the solution was adjusted to be 10°C, and then while the solution was being stirred, 168.8 g of n-butyraldehyde was added thereto. As a result, a polyvinyl butyral resin in the form of white particles was precipitated. 20 minutes after the resin was precipitated, 197.8 g of 60% by weight nitric acid was added thereto, and the solution was heated to 65°C and then aged for 2 hours at 67.5°C. Subsequently, the solution was cooled and neutralized, and then the polyvinyl butyral resin was washed with water and dried, thereby obtaining a polyvinyl acetal resin AF.

(Synthesis example 33)

Synthesis of polyvinyl acetal resin AG (PVB resin):

3,292 ml of deionized water and 300 g of polyvinyl alcohol, which had an average degree of polymerization of 3,000 and a degree of saponification of 88.2 mol%, were put into a reactor equipped with a stirrer, and dissolution was performed with heating and stirring, thereby obtaining a solution. Thereafter, as a catalyst, 47.3 g of 60% by weight nitric acid was added to the solution, the temperature of the solution was adjusted to be 10°C, and then while the solution was being stirred, 174.7 g of n-butyraldehyde was added thereto. As a result, a polyvinyl butyral resin in the form of white particles was precipitated. 20 minutes after the resin was precipitated, 144 g of 60% by weight nitric acid was added thereto, and the solution was heated to 55°C and then aged for 2 hours at 57.5°C. Subsequently, the solution was cooled and neutralized, and then the polyvinyl butyral resin was washed with water and dried, thereby obtaining a polyvinyl acetal resin AG.

(Reference Example 1)

Preparation of composition X for forming first layer:

100 parts by weight of a polyvinyl acetal resin (polyvinyl acetal resin A), 30 parts by weight of a plasticizer (3GO), 0.2 parts by weight of an ultraviolet ray shielding agent (Tinuvin 326), and 0.2 parts by weight of an antioxidant (BHT) were mixed together, thereby obtaining a composition X for forming the first layer.

Preparation of composition Y for forming second and third layers:

100 parts by weight of a polyvinyl acetal resin (polyvinyl acetal resin B), 40 parts by weight of a plasticizer (3GO), 0.2 parts by weight of an ultraviolet ray shielding agent (Tinuvin 326), and 0.2 parts by weight of an antioxidant (BHT) were mixed together, thereby obtaining a composition Y for forming the second and third layers.

Preparation of interlayer film:

The composition X for forming the first layer and the composition Y for forming the second and third layers were co-extruded by using a co-extruder, thereby preparing an interlayer film (thickness: 500 μm) having a laminated structure composed of the second layer (thickness: 100μm)/the first layer (thickness: 300 μm)/the third layer (thickness: 100 μm).

Preparation of laminated glass:

The obtained interlayer film (multilayer) was cut to 100 cm (length) × 100 cm (width). Thereafter, the interlayer film was interposed between two sheets of clear glass (100 cm (length) × 100 cm (width) × 2 mm (thickness)), and the resultant was pressed in a vacuum by being held in a vacuum laminator for 30 minutes at 90°C, thereby obtaining a laminate. In the laminate, the portion of the interlayer film that stuck out of the glass was cut off, thereby obtaining laminated glass.

(Reference Examples 2 to 4 and Comparative example 1)

The interlayer film and laminated glass were prepared in the same manner as in Example 1, except that the type and content of the polyvinyl acetal resin as well as the type and content of the plasticizer were set as shown in the following Table 2.

(Example 5)

Preparation of composition X for forming first and fourth layers:

100 parts by weight of a polyvinyl acetal resin (polyvinyl acetal resin C), 43 parts by weight of a plasticizer (3GO), 0.22 parts by weight of an ultraviolet ray shielding agent (Tinuvin 326), and 0.22 parts by weight of an antioxidant (BHT) were mixed together, thereby obtaining a composition X for forming the first and fourth layers. Herein, a mixture of magnesium acetate and magnesium 2-ethylbutyrate (magnesium acetate:magnesium 2-ethylbutyrate = 50% by weight:50% by weight) was added to the composition X such that the concentration of magnesium in the first and fourth layers became 60 ppm.

Preparation of composition Y for forming second layer:

100 parts by weight of a polyvinyl acetal resin (polyvinyl acetal resin P), 60 parts by weight of a plasticizer (3GO), 0.3 parts by weight of an ultraviolet ray shielding agent (Tinuvin 326), and 0.3 parts by weight of an antioxidant (BHT) were mixed together, thereby obtaining a composition Y for forming the second layer.

Preparation of interlayer film:

The composition X for forming the first and fourth layers and the composition Y for forming the second layer were co-extruded by using a co-extruder, thereby preparing an interlayer film (thickness: 760 μm) having a laminated structure composed of the first layer (thickness: 330 μm)/the second layer (thickness: 100 μm)/the fourth layer (thickness: 330 μm).

Preparation of laminated glass:

The obtained interlayer film (multilayer) was cut to 100 cm (length) × 100 cm (width). Thereafter, the interlayer film was interposed between two sheets of clear glass (100 cm (length) × 100 cm (width) × 2 mm (thickness)), and the resultant was pressed in a vacuum by being held in a vacuum laminator for 30 minutes at 90°C, thereby obtaining a laminate. In the laminate, the portion of the interlayer film that stuck out of the glass was cut off, thereby obtaining laminated glass.

(Examples 6 to 37 and Comparative examples 2 to 9)

The interlayer film and laminated glass were prepared in the same manner as in Example 1, except that the type and content of the polyvinyl acetal resin as well as the type and content of the plasticizer were set as shown in the following Tables 3 to 7.

(Evaluation)

(1) Glass transition temperature of surfaces on both sides of interlayer film

Kneaded materials having the composition of the layer corresponding to the outermost layer in examples and comparative examples, that is, kneaded materials having the composition of each of the first layer, the second layer, the third layer, and the fourth layer were prepared. Each of the obtained kneaded materials was press-molded by a press molding machine, thereby obtaining a resin film A having a thickness of 0.35 mm. The obtained resin film A was left as was for 2 hours under conditions of a temperature of 25°C and a relative humidity of 30%. After the resin film A was left as was for 2 hours, the viscoelasticity thereof was measured by using an "ARES-G2" manufactured by TA Instruments. As a jig, a parallel plate having a diameter of 8 mm was used. The viscoelasticity was measured at a frequency of 1 Hz and a strain of 1% under the conditions in which the temperature was decreased to -10°C from 100°C at a rate of temperature decrease of 3°C/min. In the obtained measurement results, the peak temperature of the loss tangent was taken as a glass transition temperature Tg (°C) .

Furthermore, the obtained interlayer film was stored for 1 month or longer at a temperature of 23°C and a humidity of 30%, the surface layer thereof was then exfoliated, and the separated surface layer was press-molded by a press molding machine so as to obtain a molded article. Tg of the molded article may be measured by using an "ARES-G2" manufactured by TA Instruments. Tg was measured under the same conditions as the conditions described in paragraph [0161].

(2) Tensile breaking energy of interlayer film

The interlayer film was cut into a test specimen having a width of 10 mm and a length of 8 cm (JIS K6732) and mounted on a tensile tester in which the distance between chucks was set to be 40 mm, and a tensile test was performed at a tensile rate of 200 mm/min and a sampling interval of 20 μm. From the obtained stress-strain curve, a breaking energy Y was determined. The breaking energy Y can be calculated by calculating the area of a portion surrounded by the stress-strain curve and the X-axis. Furthermore, the area can be calculated by summing the products of the average of the stress of the data adjacent to each other and the value of strain between the data adjacent to each other. A breaking energy Z can be calculated by multiplying the breaking energy Y by the cross-sectional area of the test specimen.

(3) Measurement of Pummel value of laminated glass

The temperature of the obtained laminated glass was adjusted to be -18°C ± 0.6°C for 16 hours, and the central portion (portion of 150 mm (length) × 150 mm (width)) of the laminated glass was hit with a hammer with a head weighing 0.45 kg such that the glass was ground until the particle size of the glass became equal to or less than 6 mm. Then, a degree of exposure of the interlayer film after the partial exfoliation of the glass was measured, and a Pummel value was determined based on the following Table 5. The Pummel value is a value used for investigating the degree of adhesion between the interlayer film for laminated glass and the glass plate. For determining the Pummel value, the temperature of the laminated glass is adjusted to be -18°C ± 0.6°C for 16 hours; the central portion (portion of 150 mm (length) × 150 mm (width)) of the laminated glass is hit with a hammer with a head weighing 0.45 kg such that the glass is ground until the particle size of the glass becomes equal to or less than 6 mm; and a degree of exposure (area %) of the interlayer film after the partial exfoliation of the glass is measured. The Pummel value is specified by the measured degree of exposure and is defined by Table 1. That is, the higher the Pummel value, the stronger the adhesion between the interlayer film and glass.

[Table 1]

| Degree of exposure of interlayer film (area %) | Pummel value |
|---|---|
| 90 < Degree of exposure ≤ 100 | 0 |
| 85 < Degree of exposure ≤ 90 | 1 |
| 60 < Degree of exposure ≤ 85 | 2 |
| 40 < Degree of exposure ≤ 60 | 3 |
| 20 < Degree of exposure ≤ 40 | 4 |
| 10 < Degree of exposure ≤ 20 | 5 |
| 5 < Degree of exposure ≤ 10 | 6 |
| 2 < Degree of exposure ≤ 5 | 7 |
| Degree of exposure ≤ 2 | 8 |

(4) Penetration resistance

The surface temperature of the obtained laminated glass (30 cm (length) × 30 cm (width)) was adjusted to be 23°C. Thereafter, based on JIS R3212:1998, from the height of 4 m, a hard sphere having a mass of 2,260 g and a diameter of 82 mm was dropped to the central portion of each of 6 sheets of laminated glass. When all of the 6 sheets of laminated glass were not penetrated by the hard sphere within 5 seconds after being hit by the hard sphere, the laminated glass was evaluated to be "pass". When three or less sheets of laminated glass were not penetrated by the hard sphere within 5 seconds after being hit by the hard sphere, the laminated glass was evaluated to be "fail". When 4 sheets of laminated glass were not penetrated by the hard sphere within 5 seconds after being hit by the hard sphere, the penetration resistance of 6 sheets of laminated glass was newly evaluated. When 5 sheets of laminated glass were

not penetrated by the hard sphere within 5 seconds after being hit by the hard sphere, 1 sheet of laminated glass was additionally tested again, and in a case in which the 1 sheet of laminated glass was not penetrated by the hard sphere within 5 seconds after being hit by the hard sphere, the laminated glass was evaluated to be "pass". In the same way as described above, from the height of 4.0 m, 4.5 m, 5.0 m, 5.5 m, 6.0 m, 6.5 m, and 7.0 m, a hard sphere having a mass of 2,260 g and a diameter of 82 mm was dropped to the central portion of each of 6 sheets of laminated glass, thereby evaluating the penetration resistance of the laminated glass.

The results are shown in the following Tables 2 to 7.

[Table 2]

| | | | | Example 1* | Example 2* | Example 3* | Example 4* | Comparative example 1 |
|---|---|---|---|---|---|---|---|---|
| Composition of first layer | PVB resin | Thickness | μm | 380 | 380 | 380 | 380 | 380 |
| | | Type | | A | C | D | E | B |
| | | Average degree of polymerization of PVA | | 1700 | 1700 | 1700 | 1700 | 1700 |
| | | Content of hydroxyl groups | Mol% | 34.4 | 32.6 | 33.4 | 35.4 | 30.0 |
| | | Degree of acetylation | Mol% | 0.8 | 0.7 | 0.9 | 0.8 | 0.9 |
| | | Degree of butyralization | Mol% | 64.8 | 66.7 | 65.8 | 63.9 | 69.1 |
| | | Half-band width | $cm^{-1}$ | 274.8 | 244.1 | 259.5 | 278.7 | 239.3 |
| | | Content of PVB resin | Parts by mass | 100 | 100 | 100 | 100 | 100.0 |
| | Plasticizer | Type | | 3GO | 3GO | 3GO | 3GO | 3GO |
| | | Content | Parts by mass | 30 | 30 | 30 | 30 | 40 |

(continued)

| | | | | Example 1* | Example 2* | Example 3* | Example 4* | Comparative example 1 |
|---|---|---|---|---|---|---|---|---|
| Composition of second and third layers | PVB resin | Thickness | μm | 100 | 100 | 100 | 100 | 100 |
| | | Type | | B | B | B | B | B |
| | | Average degree of polymerization of PVA | | 1700 | 1700 | 1700 | 1700 | 1700 |
| | | Content of hydroxyl groups | Mol% | 30.0 | 30.0 | 30.0 | 30.0 | 30.0 |
| | | Degree of acetylation | Mol% | 0.9 | 0.9 | 0.9 | 0.9 | 0.9 |
| | | Degree of butyralization | Mol% | 69.1 | 69.1 | 69.1 | 69.1 | 69.1 |
| | | Half-band width | $cm^{-1}$ | 239.3 | 239.3 | 239.3 | 239.3 | 239.3 |
| | | Content of PVB resin | Parts by mass | 100 | 100 | 100 | 100 | 100 |
| | Plasticizer | Type | | 3GO | 3GO | 3GO | 3GO | 3GO |
| | | Content | Parts by mass | 40 | 40 | 40 | 40 | 40 |
| Evaluation | Tg of outermost layer | | °C | 28.1 | 28.5 | 29.0 | 28.6 | 28.6 |
| | Tensile breaking energy | | $J/mm^2$ | 2.42 | 2.24 | 2.07 | 2.19 | 1.60 |
| | Pummel value | | | 4 | 4 | 4 | 5 | 5 |
| | Penetration resistance | | 4 m | Pass | Pass | Pass | Pass | Pass |
| | | | 4.5 m | Pass | Pass | Pass | Pass | Fail |
| | | | 5 m | Pass | Pass | Pass | Pass | Fail |
| | | | 5.5 m | Pass | Pass | Pass | Pass | Fail |
| | | | 6 m | Pass | Pass | Pass | Pass | Fail |
| | | | 6.5 m | Pass | Pass | Pass | Fail | Fail |
| | | | 7 m | Pass | Pass | Fail | Fail | Fail |

* Reference Examples

[Table 3]

| | | | | Example 5 | Example 6 | Example 7 | Example 8 | Example 9 | Example 10 | Example 11 | Example 12 | Example 13 |
|---|---|---|---|---|---|---|---|---|---|---|---|---|
| Composition of first layer | | Thickness | μm | 330 | 330 | 330 | 330 | 355 | 355 | 355 | 355 | 345 |
| | PVB resin | Type | | F | F | A | G | F | F | A | G | F |
| | | Average degree of polymerization of PVA | | 1700 | 1700 | 1700 | 1700 | 1700 | 1700 | 1700 | 1700 | 1700 |
| | | Content of hydroxyl groups | Mol% | 31.6 | 31.6 | 34.4 | 35.2 | 31.6 | 31.6 | 34.4 | 35.2 | 31.6 |
| | | Degree of acetylation | Mol% | 1.0 | 1.0 | 1.0 | 1.0 | 1.0 | 1.0 | 1.0 | 1.0 | 1.0 |
| | | Degree of butyralization | Mol% | 67.4 | 67.4 | 64.6 | 63.8 | 67.4 | 67.4 | 64.6 | 63.8 | 67.4 |
| | | Half-band width | $cm^{-1}$ | 251.2 | 251.2 | 274.8 | 269.1 | 251.2 | 251.2 | 274.8 | 269.1 | 251.2 |
| | | Content of PVB resin | Parts by mass | 100 | 100 | 100 | 100 | 100 | 100 | 100 | 100 | 100 |
| | Plasticizer | Type | | 3GO | 3GO | 3GO | 3GO | 3GO | 3GO | 3GO | 3GO | 3GO |
| | | Content | Parts by mass | 43.0 | 38.3 | 30.8 | 25.8 | 43.0 | 38.3 | 30.8 | 25.8 | 43.0 |

(continued)

| | | | | Example 5 | Example 6 | Example 7 | Example 8 | Example 9 | Example 10 | Example 11 | Example 12 | Example 13 |
|---|---|---|---|---|---|---|---|---|---|---|---|---|
| Composition of second layer | PVB resin | Thickness | μm | 100 | 100 | 100 | 100 | 50 | 50 | 50 | 50 | 70 |
| | | Type | | P | Q | R | S | P | Q | R | S | P |
| | | Average degree of polymerization of PVA | | 3000 | 3000 | 3000 | 3000 | 3000 | 3000 | 3000 | 3000 | 3000 |
| | | Content of hydroxyl groups | Mol% | 26.6 | 24.8 | 24.1 | 21.7 | 26.6 | 24.8 | 24.1 | 21.7 | 26.6 |
| | | Degree of acetylation | Mol% | 11.8 | 11.8 | 11.8 | 11.8 | 11.8 | 11.8 | 11.8 | 11.8 | 11.8 |
| | | Degree of butyralization | Mol% | 61.6 | 63.4 | 64.1 | 66.5 | 61.6 | 63.4 | 64.1 | 66.5 | 61.6 |
| | | Half-band width | $cm^{-1}$ | 170.2 | 166. 5 | 165.6 | 160.4 | 170.2 | 166.5 | 165.6 | 160.4 | 170.2 |
| | | Content of PVB resin | Parts by mass | 100 | 100 | 100 | 100 | 100 | 100 | 100 | 100 | 100 |
| | Plasticizer | Type | | 3GO | 3GO | 3GO | 3GO | 3GO | 3GO | 3GO | 3GO | 3GO |
| | | Content | Parts by mass | 60 | 60 | 75 | 70 | 60 | 60 | 75 | 70 | 60 |

(continued)

| | | | | Example 5 | Example 6 | Example 7 | Example 8 | Example 9 | Example 10 | Example 11 | Example 12 | Example 13 |
|---|---|---|---|---|---|---|---|---|---|---|---|---|
| Composition of fourth layer | PVB resin | Thickness | $\mu m$ | 330 | 330 | 330 | 330 | 355 | 355 | 355 | 355 | 345 |
| | | Type | | F | F | A | G | F | F | A | G | F |
| | | Average degree of polymerization of PVA | | 1700 | 1700 | 1700 | 1700 | 1700 | 1700 | 1700 | 1700 | 1700 |
| | | Content of hydroxyl groups | Mol% | 31.6 | 31.6 | 34.4 | 35.2 | 31.6 | 31.6 | 34.4 | 35.2 | 31.6 |
| | | Degree of acetylation | Mol% | 1.0 | 1.0 | 1.0 | 1.0 | 1.0 | 1.0 | 1.0 | 1.0 | 1.0 |
| | | Degree of butyralization | Mol% | 67.4 | 67.4 | 64.6 | 63.8 | 67.4 | 67.4 | 64.6 | 63.8 | 67.4 |
| | | Half-band width | $cm^{-1}$ | 251.2 | 251.2 | 274.8 | 269.1 | 251.2 | 251.2 | 274.8 | 269.1 | 251.2 |
| | | Content of PVB resin | Parts by mass | 100 | 100 | 100 | 100 | 100 | 100 | 100 | 100 | 100 |
| | Plasticizer | Type | | 3GO | 3GO | 3GO | 3GO | 3GO | 3GO | 3GO | 3GO | 3GO |
| | | Content | Parts by mass | 43.0 | 38.3 | 30.8 | 25.8 | 43.0 | 38.3 | 30.8 | 25.8 | 43.0 |

(continued)

| | | | Example 5 | Example 6 | Example 7 | Example 8 | Example 9 | Example 10 | Example 11 | Example 12 | Example 13 |
|---|---|---|---|---|---|---|---|---|---|---|---|
| Evaluation | Tg of outermost layer | °C | 26.2 | 29.8 | 38.2 | 42.8 | 26.2 | 29.8 | 38.2 | 42.8 | 26.2 |
| | Tensile breaking energy Y | $J/mm^2$ | 2.00 | 2.21 | 2.87 | 2.98 | 2.15 | 2.38 | 3.08 | 3.21 | 2.09 |
| | Tensile breaking energy Z | J | 15.19 | 16.81 | 21.78 | 22.68 | 16.34 | 18.09 | 23.43 | 24.40 | 15.88 |
| | Pummel value | | 2 | 2 | 2 | 2 | 2 | 2 | 2 | 2 | 2 |
| | Penetration resistance | 4 m | Pass | Pass | Pass | Pass | Pass | Pass | Pass | Pass | Pass |
| | | 4.5 m | Pass | Pass | Pass | Pass | Pass | Pass | Pass | Pass | Pass |
| | | 5 m | Pass | Pass | Pass | Pass | Pass | Pass | Pass | Pass | Pass |
| | | 5.5 m | Pass | Pass | Pass | Pass | Pass | Pass | Pass | Pass | Pass |
| | | 6 m | Pass | Pass | Pass | Pass | Pass | Pass | Pass | Pass | Pass |
| | | 6.5 m | Fail | Fail | Pass | Pass | Fail | Pass | Pass | Pass | Fail |
| | | 7 m | Fail | Fail | Pass | Pass | Fail | Fail | Pass | Pass | Fail |
| | | 7.5 m | Fail | Fail | Pass | Fail | Fail | Fail | Pass | Pass | Fail |
| | | | | | | | | | | | |

[Table 4]

| | | | | Example 14 | Example 15 | Example 16 | Example 17 | Example 18 | Example 19 | Example 20 | Example 21 |
|---|---|---|---|---|---|---|---|---|---|---|---|
| Composition of first layer | PVB resin | Thickness | μm | 345 | 345 | 345 | 330 | 330 | 330 | 330 | 330 |
| | | Type | | F | A | G | H | A | A | A | A |
| | | Average degree of polymerization of PVA | | 1700 | 1700 | 1700 | 1700 | 1700 | 1700 | 1700 | 1700 |
| | | Content of hydroxyl groups | Mol% | 31.6 | 34.4 | 35.2 | 33.0 | 34.4 | 34.4 | 34.4 | 34.4 |
| | | Degree of acetylation | Mol% | 1.0 | 1.0 | 1.0 | 1.0 | 1.0 | 1.0 | 1.0 | 1.0 |
| | | Degree of butyralization | Mol% | 67.4 | 64.6 | 63.8 | 66.0 | 64.6 | 64.6 | 64.6 | 64.6 |
| | | Half-band width | $cm^{-1}$ | 251.2 | 274.8 | 269.1 | 257.3 | 274.8 | 274.8 | 274.8 | 274.8 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 38.3 | 30.8 | 25.8 | 35.6 | 30.8 | 30.8 | 30.8 | 30.8 |

(continued)

| | | | | Example 14 | Example 15 | Example 16 | Example 17 | Example 18 | Example 19 | Example 20 | Example 21 |
|---|---|---|---|---|---|---|---|---|---|---|---|
| Composition of second layer | PVB resin | Thickness | μm | 70 | 70 | 70 | 100 | 100 | 100 | 100 | 100 |
| | | Type | | Q | R | S | T | U | V | W | X |
| | | Average degree of polymerization of PVA | | 3000 | 3000 | 3000 | 3000 | 1700 | 2300 | 1700 | 1700 |
| | | Content of hydroxyl groups | Mol% | 24.8 | 24.1 | 21.7 | 25.6 | 24.1 | 24.1 | 22.6 | 24.5 |
| | | Degree of acetylation | Mol% | 11.8 | 11.8 | 11.8 | 11.8 | 11.8 | 11.8 | 1.5 | 6.2 |
| | | Degree of butyralization | Mol% | 63.4 | 64.1 | 66.5 | 62.6 | 64.1 | 64.1 | 75.9 | 69.3 |
| | | Half-band width | $cm^{-1}$ | 166.5 | 165.6 | 160.4 | 168.4 | 163.4 | 163.8 | 162.2 | 164.9 |
| | Plasticizer | Content of PVB resin | Parts by mass | 100 | 100 | 100 | 100 | 100 | 100 | 100 | 100 |
| | | Type | | 3GO | 3GO | 3GO | 3GO | 3GO | 3GO | 3GO | 3GO |
| | | Content | Parts by mass | 60 | 75 | 70 | 75 | 75 | 75 | 75 | 75 |

(continued)

| | | | | Example 14 | Example 15 | Example 16 | Example 17 | Example 18 | Example 19 | Example 20 | Example 21 |
|---|---|---|---|---|---|---|---|---|---|---|---|
| Composition of fourth layer | PVB resin | Thickness | μm | 345 | 345 | 345 | 330 | 330 | 330 | 330 | 330 |
| | | Type | | F | A | G | H | A | A | A | A |
| | | Average degree of polymerization of PVA | | 1700 | 1700 | 1700 | 1700 | 1700 | 1700 | 1700 | 1700 |
| | | Content of hydroxyl groups | Mol% | 31.6 | 34.4 | 35.2 | 33.0 | 34.4 | 34.4 | 34.4 | 34.4 |
| | | Degree of acetylation | Mol% | 1.0 | 1.0 | 1.0 | 1.0 | 1.0 | 1.0 | 1.0 | 1.0 |
| | | Degree of butyralization | Mol% | 67.4 | 64.6 | 63.8 | 66.0 | 64.6 | 64.6 | 64.6 | 64.6 |
| | | Half-band width | $cm^{-1}$ | 251.2 | 274.8 | 269.1 | 257.3 | 274.8 | 274.8 | 274.8 | 274.8 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 38.3 | 30.8 | 25.8 | 35.6 | 30.8 | 30.8 | 30.8 | 30.8 |

(continued)

| | | | Example 14 | Example 15 | Example 16 | Example 17 | Example 18 | Example 19 | Example 20 | Example 21 |
|---|---|---|---|---|---|---|---|---|---|---|
| Evaluation | Tg of outermost layer | °C | 29.8 | 38.2 | 42.8 | 33.2 | 38.2 | 38.2 | 38.2 | 38.2 |
| | Tensile breaking energy Y | $J/mm^2$ | 2.31 | 3.00 | 3.12 | 2.41 | 2.73 | 2.75 | 2.68 | 2.66 |
| | Tensile breaking energy Z | J | 17.58 | 22.77 | 23.71 | 18.35 | 20.75 | 20.90 | 20.37 | 20.22 |
| | Pummel value | | 2 | 2 | 2 | 2 | 2 | 2 | 2 | 2 |
| | Penetration resistance | 4 m | Pass | Pass | Pass | Pass | Pass | Pass | Pass | Pass |
| | | 4.5 m | Pass | Pass | Pass | Pass | Pass | Pass | Pass | Pass |
| | | 5 m | Pass | Pass | Pass | Pass | Pass | Pass | Pass | Pass |
| | | 5.5 m | Pass | Pass | Pass | Pass | Pass | Pass | Pass | Pass |
| | | 6 m | Pass | Pass | Pass | Pass | Pass | Pass | Pass | Pass |
| | | 6.5 m | Pass | Pass | Pass | Pass | Pass | Pass | Pass | Pass |
| | | 7 m | Fail | Pass | Pass | Fail | Pass | Pass | Pass | Pass |
| | | 7.5 m | Fail | Pass | Fail | Fail | Pass | Pass | Pass | Pass |

[Table 5]

| | | | | Example 22 | Example 23 | Example 24 | Example 25 | Example 26 | Example 27 | Example 28 | Example 29 |
|---|---|---|---|---|---|---|---|---|---|---|---|
| Composition of first layer | PVB resin | Thickness | μm | 330 | 330 | 330 | 330 | 270 | 270 | 270 | 270 |
| | | Type | | A | A | I | J | A | H | J | K |
| | | Average degree of polymerization of PVA | | 1700 | 1700 | 1700 | 1700 | 1700 | 1700 | 1700 | 1700 |
| | | Content of hydroxyl groups | Mol% | 34.4 | 34.4 | 32.3 | 34.8 | 34.4 | 33.0 | 34.8 | 33.5 |
| | | Degree of acetylation | Mol% | 1.0 | 1.0 | 1.0 | 1.0 | 1.0 | 1.0 | 1.0 | 1.0 |
| | | Degree of butyralization | Mol% | 64.6 | 64.6 | 66.7 | 64.2 | 64.6 | 66.0 | 64.2 | 65.5 |
| | | Half-band width | $cm^{-1}$ | 274.8 | 274.8 | 253.5 | 267.0 | 274.8 | 257.3 | 267.0 | 260.0 |
| | | Content of PVB resin | Parts by mass | 100 | 100 | 100 | 100 | 100 | 100 | 100 | 100 |
| | Plasti cizer | Type | | 3GO | 3GO | 3GO | 3GO | 3GO | 3GO | 3GO | 3GO |
| | | Content | Parts by mass | 30.8 | 30.8 | 36.6 | 28.8 | 30.8 | 35.6 | 28.8 | 33.1 |

(continued)

| | | | | Example 22 | Example 23 | Example 24 | Example 25 | Example 26 | Example 27 | Example 28 | Example 29 |
|---|---|---|---|---|---|---|---|---|---|---|---|
| Composition of second layer | PVB resin | Thickness | μm | 100 | 100 | 100 | 100 | 100 | 100 | 100 | 100 |
| | | Type | | Y | Z | AA | AB | R | AA | AB | AC |
| | | Average degree of polymerization of PVA | | 2300 | 2300 | 3000 | 3000 | 3000 | 3000 | 3000 | 3000 |
| | | Content of hydroxyl groups | Mol% | 22.6 | 24.5 | 25.2 | 23.3 | 24.1 | 25.2 | 23.3 | 24.6 |
| | | Degree of acetylation | Mol% | 1.5 | 6.2 | 11.8 | 11.8 | 11.8 | 11.8 | 11.8 | 11.8 |
| | | Degree of butyralization | Mol% | 75.9 | 69.3 | 63.0 | 64.9 | 64.1 | 63.0 | 64.9 | 63.6 |
| | | Half-band width | $cm^{-1}$ | 162.7 | 164.5 | 167.7 | 165.1 | 165.6 | 167.7 | 165.1 | 166.6 |
| | | Content of PVB resin | Parts by mass | 100 | 100 | 100 | 100 | 100 | 100 | 100 | 100 |
| | Plasti cizer | Type | | 3GO | 3GO | 3GO | 3GO | 3GO | 3GO | 3GO | 3GO |
| | | Content | Parts by mass | 75 | 75 | 75 | 75 | 75 | 75 | 75 | 75 |

(continued)

| | | | | Example 22 | Example 23 | Example 24 | Example 25 | Example 26 | Example 27 | Example 28 | Example 29 |
|---|---|---|---|---|---|---|---|---|---|---|---|
| Composition of fourth layer | PVB resin | Thickness | μm | 330 | 330 | 330 | 330 | 270 | 270 | 270 | 270 |
| | | Type | | A | A | I | J | A | H | J | K |
| | | Average degree of polymerization of PVA | | 1700 | 1700 | 1700 | 1700 | 1700 | 1700 | 1700 | 1700 |
| | | Content of hydroxyl groups | Mol% | 34.4 | 34.4 | 32.3 | 34.8 | 34.4 | 33.0 | 34.8 | 33.5 |
| | | Degree of acetylation | Mol% | 1.0 | 1.0 | 1.0 | 1.0 | 1.0 | 1.0 | 1.0 | 1.0 |
| | | Degree of butyralization | Mol% | 64.6 | 64.6 | 66.7 | 64.2 | 64.6 | 66.0 | 64.2 | 65.5 |
| | | Half-band width | $cm^{-1}$ | 274.8 | 274.8 | 253.5 | 267.0 | 274.8 | 257.3 | 267.0 | 260.0 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 30.8 | 30.8 | 36.6 | 28.8 | 30.8 | 35.6 | 28.8 | 33.1 |

(continued)

| | | | Example 22 | Example 23 | Example 24 | Example 25 | Example 26 | Example 27 | Example 28 | Example 29 |
|---|---|---|---|---|---|---|---|---|---|---|
| Evaluation | Tg of outermost layer | °C | 38.2 | 38.2 | 31.8 | 40.1 | 38.2 | 33.2 | 40.1 | 35.6 |
| | Tensile breaking energy Y | $J/mm^2$ | 2.70 | 2.69 | 2.33 | 2.82 | 2.78 | 2.35 | 2.74 | 2.48 |
| | Tensile breaking energy Z | J | 20.52 | 20.44 | 17.72 | 21.46 | 17.82 | 15.01 | 17.56 | 15.90 |
| | Pummel value | | 2 | 2 | 2 | 2 | 2 | 2 | 2 | 2 |
| | Penetration resistance | 4 m | Pass | Pass | Pass | Pass | Pass | Pass | Pass | Pass |
| | | 4.5 m | Pass | Pass | Pass | Pass | Pass | Pass | Pass | Pass |
| | | 5 m | Pass | Pass | Pass | Pass | Pass | Pass | Pass | Pass |
| | | 5.5 m | Pass | Pass | Pass | Pass | Pass | Pass | Pass | Pass |
| | | 6 m | Pass | Pass | Pass | Pass | Pass | Pass | Pass | Pass |
| | | 6.5 m | Pass | Pass | Pass | Pass | Pass | Fail | Pass | Fail |
| | | 7 m | Pass | Pass | Fail | Pass | Fail | Fail | Fail | Fail |
| | | 7.5 m | Pass | Pass | Fail | Fail | Fail | Fail | Fail | Fail |

[Table 6]

| | | | | Example 30 | Example 31 | Example 32 | Example 33 | Example 34 | Example 35 | Example 36 | Example 37 |
|---|---|---|---|---|---|---|---|---|---|---|---|
| Composition of first layer | PVB resin | Thickness | μm | 330 | 280 | 225 | 250 | 250 | 225 | 280 | 280 |
| | | Type | | K | A | A | A | A | A | A | A |
| | | Average degree of polymerization of PVA | | 1700 | 1700 | 1700 | 1700 | 1700 | 1700 | 1700 | 1700 |
| | | Content of hydroxyl groups | Mol% | 33.5 | 34.4 | 34.4 | 34.4 | 34.4 | 34.4 | 34.4 | 34.4 |
| | | Degree of acetylation | Mol% | 1.0 | 1.0 | 1.0 | 1.0 | 1.0 | 1.0 | 1.0 | 1.0 |
| | | Degree of butyralization | Mol% | 65.5 | 64.6 | 64.6 | 64.6 | 64.6 | 64.6 | 64.6 | 64.6 |
| | | Half-band width | $cm^{-1}$ | 260.0 | 274.8 | 274.8 | 274.8 | 274.8 | 274.8 | 274.8 | 264.8 |
| | | Content of PVB resin | Parts by mass | 100 | 100 | 100 | 100 | 100 | 100 | 100 | 100 |
| | Plasti cizer | Type | | 3GO | 3GO | 3GO | 3GO | 3GO | 3GO | 3GO | 3GO |
| | | Content | Parts by mass | 33.1 | 30.8 | 30.8 | 30.8 | 30.8 | 30.8 | 30.8 | 30.8 |

(continued)

| | | | | Example 30 | Example 31 | Example 32 | Example 33 | Example 34 | Example 35 | Example 36 | Example 37 |
|---|---|---|---|---|---|---|---|---|---|---|---|
| Composition of second layer | PVB resin | Thickness | μm | 100 | 80 | 100 | 50 | 50 | 100 | 80 | 80 |
| | | Type | | AC | R | R | R | AD | AD | AE | AF |
| | | Average degree of polymerization of PVA | | 3000 | 3000 | 3000 | 3000 | 3000 | 3000 | 3000 | 3000 |
| | | Content of hydroxyl groups | Mol% | 24.6 | 24.1 | 24.1 | 24.1 | 23.8 | 23.8 | 24.0 | 23.9 |
| | | Degree of acetylation | Mol% | 11.8 | 11.8 | 11.8 | 11.8 | 25.0 | 25.0 | 14.2 | 17.3 |
| | | Degree of butyralization | Mol% | 63.6 | 64.1 | 64.1 | 64.1 | 51.2 | 51.2 | 61.8 | 58.8 |
| | | Half-band width | $cm^{-1}$ | 166.6 | 165.6 | 165.6 | 165.6 | 174.1 | 174.1 | 168.9 | 168.7 |
| | Plasticizer | Content of PVB resin | Parts by mass | 100 | 100 | 100 | 100 | 100 | 100 | 100 | 100 |
| | | Type | | 3GO | 3GO | 3GO | 3GO | 3GO | 3GO | 3GO | 3GO |
| | | Content | Parts by mass | 75 | 75 | 75 | 75 | 60 | 60 | 70 | 70 |

(continued)

| | | | | Example 30 | Example 31 | Example 32 | Example 33 | Example 34 | Example 35 | Example 36 | Example 37 |
|---|---|---|---|---|---|---|---|---|---|---|---|
| Composition of fourth layer | PVB resin | Thickness | μm | 330 | 280 | 225 | 250 | 250 | 225 | 280 | 280 |
| | | Type | | K | A | A | A | A | A | A | A |
| | | Average degree of polymerization of PVA | | 1700 | 1700 | 1700 | 1700 | 1700 | 1700 | 1700 | 1700 |
| | | Content of hydroxyl groups | Mol% | 33.5 | 34.4 | 34.4 | 34.4 | 34.4 | 34.4 | 34.4 | 34.4 |
| | | Degree of acetylation | Mol% | 1.0 | 1.0 | 1.0 | 1.0 | 1.0 | 1.0 | 1.0 | 1.0 |
| | | Degree of butyralization | Mol% | 65.5 | 64.6 | 64.6 | 64.6 | 64.6 | 64.6 | 64.6 | 64.6 |
| | | Half-band width | $cm^{-1}$ | 260.0 | 274.8 | 274.8 | 274.8 | 274.8 | 274.8 | 274.8 | 264.8 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 33.1 | 30.8 | 30.8 | 30.8 | 30.8 | 30.8 | 30.8 | 30.8 |

(continued)

| | | | Example 30 | Example 31 | Example 32 | Example 33 | Example 34 | Example 35 | Example 36 | Example 37 |
|---|---|---|---|---|---|---|---|---|---|---|
| Evaluation | Tg of outermost layer | °C | 35.6 | 38.2 | 38.2 | 38.2 | 38.2 | 38.2 | 38.2 | 38.2 |
| | Tensile breaking energy Y | $J/mm^2$ | 2.56 | 2.89 | 2.70 | 3.00 | 2.82 | 2.51 | 2.89 | 2.70 |
| | Tensile breaking energy Z | J | 19.43 | 18.48 | 14.85 | 16.50 | 15.51 | 13.81 | 18.48 | 17.28 |
| | Pummel value | | 2 | 2 | 2 | 2 | 2 | 2 | 2 | 2 |
| | Penetration resistance | 4 m | Pass | Pass | Pass | Pass | Pass | Pass | Pass | Pass |
| | | 4.5 m | Pass | Pass | Pass | Pass | Pass | Pass | Pass | Pass |
| | | 5 m | Pass | Pass | Pass | Pass | Pass | Pass | Pass | Pass |
| | | 5.5 m | Pass | Pass | Pass | Pass | Pass | Pass | Pass | Pass |
| | | 6 m | Pass | Pass | Pass | Pass | Pass | Fail | Pass | Pass |
| | | 6.5 m | Pass | Pass | Fail | Fail | Fail | Fail | Pass | Pass |
| | | 7 m | Fail | Fail | Fail | Fail | Fail | Fail | Fail | Fail |
| | | 7.5 m | Fail | Fail | Fail | Fail | Fail | Fail | Fail | Fail |

[Table 7]

| | | | | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|
| Composition of first layer | PVB resin | Thickness | μm | 330 | 330 | 330 | 330 | 225 | 250 | 280 | 270 |
| | | Type | | L | M | N | O | N | N | N | N |
| | | Average degree of polymerization of PVA | | 1700 | 1700 | 1700 | 1700 | 1700 | 1700 | 1700 | 1700 |
| | | Content of hydroxyl groups | Mol% | 29.7 | 31.7 | 34.5 | 34.9 | 34.5 | 34.5 | 34.5 | 34.5 |
| | | Degree of acetylation | Mol% | 1.0 | 1.0 | 1.0 | 1.0 | 1.0 | 1.0 | 1.0 | 1.0 |
| | | Degree of butyralization | Mol% | 69.3 | 67.3 | 64.5 | 64.1 | 64.5 | 64.5 | 64.5 | 64.5 |
| | | Half-band width | $cm^{-1}$ | 234.4 | 237.4 | 244.1 | 247.6 | 244.1 | 244.1 | 244.1 | 244.1 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 40.7 | 38.3 | 30.5 | 24.5 | 30.5 | 30.5 | 30.5 | 30.5 |

(continued)

| | | | | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|
| Composition of second layer | PVB resin | Thickness | μm | 100 | 100 | 100 | 100 | 100 | 50 | 80 | 100 |
| | | Type | | AG | Q | R | S | R | R | R | R |
| | | Average degree of polymerization of PVA | | 3000 | 3000 | 3000 | 3000 | 3000 | 3000 | 3000 | 3000 |
| | | Content of hydroxyl groups | Mol% | 25.1 | 24.8 | 24.1 | 21.7 | 24.1 | 24.1 | 24.1 | 24.1 |
| | | Degree of acetylation | Mol% | 11.8 | 11.8 | 11.8 | 11.8 | 11.8 | 11.8 | 11.8 | 11.8 |
| | | Degree of butyralization | Mol% | 63.1 | 63.4 | 64.1 | 66.5 | 64.1 | 64.1 | 64.1 | 64.1 |
| | | Half-band width | $cm^{-1}$ | 167.4 | 166.5 | 165.6 | 160.4 | 165.6 | 165.6 | 165.6 | 165.6 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 75 | 75 | 75 | 75 | 75 | 75 | 75 | 75 |

(continued)

| | | | | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|
| Composition of fourth layer | PVB resin | Thickness | μm | 330 | 330 | 330 | 330 | 225 | 250 | 280 | 270 |
| | | Type | | L | M | N | O | N | N | N | N |
| | | Average degree of polymerization of PVA | | 1700 | 1700 | 1700 | 1700 | 1700 | 1700 | 1700 | 1700 |
| | | Content of hydroxyl groups | Mol% | 29.7 | 31.7 | 34.5 | 34.9 | 34.5 | 34.5 | 34.5 | 34.5 |
| | | Degree of acetylation | Mol% | 1.0 | 1.0 | 1.0 | 1.0 | 1.0 | 1.0 | 1.0 | 1.0 |
| | | Degree of butyralization | Mol% | 69.3 | 67.3 | 64.5 | 64.1 | 64.5 | 64.5 | 64.5 | 64.5 |
| | | Half-band width | $cm^{-1}$ | 234.4 | 237.4 | 244.1 | 247.6 | 244.1 | 244.1 | 244.1 | 244.1 |
| | | Content of PVB resin | Parts by mass | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Parts by mass | 40.7 | 38.3 | 30.5 | 24.5 | 30.5 | 30.5 | 30.5 | 30.5 |

(continued)

| | | | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| Evaluation | Tg of outermost layer | °C | 26.3 | 29.9 | 38.5 | 43.5 | 38.5 | 38.5 | 38.5 | 38.5 |
| | Tensile breaking energy Y | $J/mm^2$ | 1.65 | 2.02 | 2.43 | 2.61 | 2.21 | 2.45 | 2.36 | 2.28 |
| | Tensile breaking energy Z | J | 12.54 | 15.38 | 18.48 | 19.80 | 12.15 | 13.50 | 15.12 | 14.58 |
| | Pummel value | | 2 | 2 | 2 | 2 | 2 | 2 | 2 | 2 |
| | Penetration resistance | 4 m | Pass | Pass | Pass | Pass | Pass | Pass | Pass | Pass |
| | | 4.5 m | Fail | Pass | Pass | Pass | Fail | Pass | Pass | Pass |
| | | 5 m | Fail | Pass | Pass | Pass | Fail | Fail | Pass | Pass |
| | | 5.5 m | Fail | Pass | Pass | Pass | Fail | Fail | Fail | Fail |
| | | 6 m | Fail | Pass | Pass | Pass | Fail | Fail | Fail | Fail |
| | | 6.5 m | Fail | Fail | Pass | Pass | Fail | Fail | Fail | Fail |
| | | 7 m | Fail | Fail | Fail | Fail | Fail | Fail | Fail | Fail |
| | | 7.5 m | Fail | Fail | Fail | Fail | Fail | Fail | Fail | Fail |

Reference Signs List

| | |
|---|---|
| 1, 1A | ··· interlayer film |
| 1a | ··· first surface |
| 1b | ··· second surface |
| 2 | ··· first layer |
| 2a | ··· first surface |
| 2b | ··· second surface |
| 3 | ··· second surface |
| 3a | ··· outer surface |
| 4 | ··· third layer |
| 4a | ··· outer surface |
| 5 | ··· fourth layer |
| 5a | ··· outer surface |
| 11 | ··· laminated glass |
| 21 | ··· first laminated glass member |
| 22 | ··· second laminated glass member |
| 31 | ··· interlayer film for laminated glass |

## Claims

**1.** An interlayer film for laminated glass, comprising:

a first layer which contains a polyvinyl acetal resin and a plasticizer,
a second layer which is disposed on a first surface side of the first layer and contains a polyvinyl acetal resin and a plasticizer, and
a fourth layer which is disposed on a surface side of the second layer that is opposite to the first layer side and contains a polyvinyl acetal resin and a plasticizer,
wherein the content of the plasticizer contained in the fourth layer with respect to 100 parts by weight of the polyvinyl acetal resin contained in the fourth layer is smaller than the content of the plasticizer contained in the second layer with respect to 100 parts by weight of the polyvinyl acetal resin contained in the second layer,
when two surfaces on both sides of the interlayer film have different glass transition temperatures respectively, a lower glass transition temperature (°C) between the glass transition temperatures of the two surfaces on both sides of the interlayer film is denoted by X,
when the two surfaces on both sides of the interlayer film have the same glass transition temperature, the glass transition temperature (°C) of the two surfaces on both sides of the interlayer film is denoted by X,
wherein a glass transition temperature of surfaces on both sides of the interlayer film corresponds to a glass transition temperature of outermost layers of the interlayer film,
a tensile breaking energy ($J/mm^2$) of the interlayer film is denoted by Y, the tensile breaking energy is measured at 23°C under a distance between chucks of 40 mm, a tensile rate of 200 mm/min and a sampling interval of 20 μm by using a tensile tester and a test specimen of the interlayer film having a width of 10 mm and a length of 8 cm,
in this case, X is equal to or higher than 20°C and equal to or less than 50°C, and Y is equal to or greater than (0.043X + 0.83) $J/mm^2$,
wherein the glass transition temperature of surfaces on both sides of the interlayer film is measured as follows: Kneaded materials having the composition of the layer corresponding to the outermost layer are prepared; Each of the obtained kneaded materials is press-molded by a press molding machine, thereby obtaining a resin film having a thickness of 0.35 mm; The obtained resin film is left as was for 2 hours under conditions of a temperature of 25°C and a relative humidity of 30%; After the resin film is left as was for 2 hours, the viscoelasticity thereof is measured by using an "ARES-G2" manufactured by TA Instruments; As a jig, a parallel plate having a diameter of 8 mm is used; The viscoelasticity is measured at a frequency of 1 Hz and a strain of 1% under the conditions in which the temperature is decreased to -10°C from 100°C at a rate of temperature decrease of 3°C/min; In the obtained measurement results, the peak temperature of the loss tangent is taken as a glass transition temperature Tg (°C).

2. The interlayer film for laminated glass according to claim 1, wherein the content of hydroxyl groups of the polyvinyl acetal resin contained in the first layer is equal to or greater than 31.5 mol%.

3. The interlayer film for laminated glass according to claim 1 or 2, wherein a degree of acetylation of the polyvinyl acetal resin contained in the first layer is equal to or less than 2 mol%.

4. The interlayer film for laminated glass according to any one of claims 1 to 3, wherein a degree of acetalization of the polyvinyl acetal resin contained in the first layer is equal to or less than 68.2 mol%.

5. The interlayer film for laminated glass according to any one of claims 1 to 4, wherein the content of hydroxyl groups of the polyvinyl acetal resin contained in the first layer is greater than the content of hydroxyl groups of the polyvinyl acetal resin contained in the second layer.

6. The interlayer film for laminated glass according to any one of claims 1 to 4, wherein the content of the plasticizer contained in the first layer with respect to 100 parts by weight of the polyvinyl acetal resin contained in the first layer is smaller than the content of the plasticizer contained in the second layer with respect to 100 parts by weight of the polyvinyl acetal resin contained in the second layer.

7. The interlayer film for laminated glass according to any one of claims 1 to 4, wherein the content of hydroxyl groups of the polyvinyl acetal resin contained in the first layer is greater than the content of hydroxyl groups of the polyvinyl acetal resin contained in the second layer, and the content of the plasticizer contained in the first layer with respect to 100 parts by weight of the polyvinyl acetal resin contained in the first layer is smaller than the content of the plasticizer contained in the second layer with respect to 100 parts by weight of the polyvinyl acetal resin contained in the second layer.

8. The interlayer film for laminated glass according to any one of claims 1 to 7, wherein the content of hydroxyl groups of the polyvinyl acetal resin contained in the fourth layer is greater than the content of hydroxyl groups of the polyvinyl acetal resin contained in the second layer.

9. Laminated glass comprising:

a first laminated glass member;
a second laminated glass member; and
the interlayer film for laminated glass according to any one of claims 1 to 8,
wherein the interlayer film for laminated glass is disposed between the first laminated glass member and the second laminated glass member.

## Patentansprüche

1. Zwischenschichtfolie für Verbundglas, umfassend:

eine erste Schicht, die ein Polyvinylacetalharz und einen Weichmacher enthält,
eine zweite Schicht, die auf einer ersten Oberflächenseite der ersten Schicht angeordnet ist und ein Polyvinylacetalharz und einen Weichmacher enthält, und
eine vierte Schicht, die auf einer ersten Oberflächenseite der zweiten Schicht angeordnet ist, die der Seite der ersten Schicht gegenüber liegt, und ein Polyvinylacetalharz und einen Weichmacher enthält,
wobei der Gehalt des Weichmachers, der in der vierten Schicht enthalten ist, bezogen auf 100 Gewichtsteile des in der vierten Schicht enthaltenen Polyvinylacetalharzes kleiner ist als der Gehalt des in der zweiten Schicht enthaltenen Weichmachers, bezogen auf 100 Gewichtsteile des in der zweiten Schicht enthaltenen Polyvinylacetalharzes,
wenn zwei Oberflächen auf beiden Seiten der Zwischenschichtfolie jeweils unterschiedliche Glasübergangstemperaturen aufweisen, eine niedrigere Glasübergangstemperatur (°C) zwischen den Glasübergangstemperaturen der beiden Oberflächen auf beiden Seiten der Zwischenschichtfolie mit X bezeichnet wird,
wenn die zwei Oberflächen auf beiden Seiten der Zwischenschichtfolie die gleiche Glasübergangstemperatur haben, die Glasübergangstemperatur (°C) der zwei Oberflächen auf beiden Seiten der Zwischenschichtfolie

mit X bezeichnet wird,
wobei eine Glasübergangstemperatur von Oberflächen auf beiden Seiten der Zwischenschichtfolie einer Glasübergangstemperatur von äußersten Schichten der Zwischenschichtfolie entspricht,
eine Zug-Bruchenergie (J/mm$^2$) der Zwischenschichtfolie mit Y bezeichnet wird, wobei die Zug-Bruchenergie bei 23 °C mit einem Abstand zwischen Spannbacken von 40 mm, einer Zuggeschwindigkeit von 200 mm/min und einem Messintervall von 20 $\mu$m unter Verwendung einer Zugfestigkeitsprüfvorrichtung und einer Prüfprobe der Zwischenschichtfolie mit einer Breite von 10 mm und einer Länge von 8 cm gemessen wird,
wobei X in diesem Fall 20 °C oder höher und 50 °C oder niedriger ist und Y (0,043X + 0,83) J/mm$^2$ oder größer ist,
wobei die Glasübergangstemperatur der Flächen auf beiden Seiten der Zwischenschichtfolie wie folgt gemessen wird:
es werden geknetete Materialien mit der Zusammensetzung der Schicht entsprechend der äußersten Schicht hergestellt; jedes der erhaltenen gekneteten Materialien wird mit einer Pressformmaschine pressgeformt, wodurch eine Harzfolie mit einer Dicke von 0,35 mm erhalten wird; die erhaltene Harzfolie wird so, wie sie ist, 2 Stunden unter Bedingungen mit einer Temperatur von 25 °C und einer relativen Feuchte von 30 % gelassen; nachdem die Harzfolie für 2 Stunden so, wie sie ist, gelassen worden ist, wird ihre Viskoelastizität gemessen, indem ein "ARES-G2", hergestellt von TA Instruments, verwendet wird; als Lehre wird eine Parallelplatte mit einem Durchmesser von 8 mm verwendet; die Viskoelastizität wird bei einer Frequenz von 1 Hz und einer Belastung von 1 % unter den Bedingungen gemessen, bei denen die Temperatur mit einer Temperaturverringerungsgeschwindigkeit von 3 °C/min von 100 °C auf -10 °C verringert wird; bei den erhaltenen Messergebnissen wird die Spitzentemperatur der Verlustziffer als Glasübergangstemperatur Tg (°C) verwendet.

**2.** Zwischenschichtfolie für Verbundglas nach Anspruch 1,
wobei der Gehalt an Hydroxylgruppen des in der ersten Schicht enthaltenen Polyvinylacetalharzes 31,5 Mol% oder mehr beträgt.

**3.** Zwischenschichtfolie für Verbundglas nach Anspruch 1 oder 2,
wobei ein Acetylierungsgrad des in der ersten Schicht enthaltenen Polyvinylacetalharzes 2 Mol% oder weniger beträgt.

**4.** Zwischenschichtfolie für Verbundglas nach einem der Ansprüche 1 bis 3,
wobei ein Acetalisierungsgrad des in der ersten Schicht enthaltenen Polyvinylacetalharzes 68,2 Mol% oder weniger beträgt.

**5.** Zwischenschichtfolie für Verbundglas nach einem der Ansprüche 1 bis 4, wobei der Gehalt an Hydroxylgruppen des in der ersten Schicht enthaltenen Polyvinylacetalharzes größer ist als der Gehalt an Hydroxylgruppen des in der zweiten Schicht enthaltenen Polyvinylacetalharzes.

**6.** Zwischenschichtfolie für Verbundglas nach einem der Ansprüche 1 bis 4,
wobei der Gehalt des in der ersten Schicht enthaltenen Weichmachers, bezogen auf 100 Gewichtsteile des in der ersten Schicht enthaltenen Polyvinylacetalharzes, kleiner ist als der Gehalt des in der zweiten Schicht enthaltenen Weichmachers, bezogen auf 100 Gewichtsteile des in der zweiten Schicht enthaltenen Polyvinylacetalharzes.

**7.** Zwischenschichtfolie für Verbundglas nach einem der Ansprüche 1 bis 4,
wobei der Gehalt an Hydroxylgruppen des in der ersten Schicht enthaltenen Polyvinylacetalharzes größer ist als der Gehalt an Hydroxylgruppen des in der zweiten Schicht enthaltenen Polyvinylacetalharzes und
der Gehalt des in der ersten Schicht enthaltenen Weichmachers, bezogen auf 100 Gewichtsteile des in der ersten Schicht enthaltenen Polyvinylacetalharzes, kleiner ist als der Gehalt des in der zweiten Schicht enthaltenen Weichmachers, bezogen auf 100 Gewichtsteile des in der zweiten Schicht enthaltenen Polyvinylacetalharzes.

**8.** Zwischenschichtfolie für Verbundglas nach einem der Ansprüche 1 bis 7,
wobei der Gehalt an Hydroxylgruppen des in der vierten Schicht enthaltenen Polyvinylacetalharzes größer ist als der Gehalt an Hydroxylgruppen des in der zweiten Schicht enthaltenen Polyvinylacetalharzes.

**9.** Verbundglas, umfassend:

ein erstes Verbundglaselement;
ein zweites Verbundglaselement; und
die Zwischenschichtfolie für Verbundglas nach einem der Ansprüche 1 bis 8,

wobei die Zwischenschichtfolie für Verbundglas zwischen dem ersten Verbundglaselement und dem zweiten Verbundglaselement angeordnet ist.

## Revendications

1. Un film intercouche pour verre feuilleté comprenant:

une première couche qui contient une résine de polyvinylacétal et un plastifiant,
une seconde couche qui est disposée sur un premier côté de la surface de la première couche et qui contient une résine de polyvinylacétal et un plastifiant, et
une quatrième couche qui est disposée sur un côté de la surface de la seconde couche qui est opposé au côté de la première couche et contient une résine de polyvinylacétal et un plastifiant,
dans lequel la teneur en plastifiant contenu dans la quatrième couche par rapport à 100 parties en poids de la résine de polyvinylacétal contenue dans la quatrième couche est inférieure à la teneur en plastifiant contenu dans la seconde couche par rapport à 100 parties en poids de la résine de polyvinylacétal contenue dans la seconde couche,
lorsque deux surfaces situées de part et d'autre du film intercouche présentent des températures de transition vitreuse respectivement différentes, une température de transition vitreuse inférieure (°C) entre les températures de transition vitreuse des deux surfaces situées de part et d'autre du film intercouche est désignée par X,
lorsque les deux surfaces des deux côtés du film intercouche ont la même température de transition vitreuse, la température de transition vitreuse (°C) des deux surfaces des deux côtés du film intercouche est désignée par X,
dans lequel une température de transition vitreuse de surfaces des deux côtés du film intercouche correspond à une température de transition vitreuse de couches les plus extérieures du film intercouche,
une énergie de rupture en traction (J/mm$^2$) du film intercouche est désigné par Y,
l'énergie de rupture en traction est mesurée à 23°C sous les conditions d'une distance entre mandrins de 40 mm, d'une vitesse de traction de 200 mm/min et à un intervalle de prélèvement de 20 μm en utilisant un testeur de traction et un échantillon d'essai du film intercouche d'une largeur de 10 mm et d'une longueur de 8 cm
dans ce cas, X est égal ou supérieur à 20°C est égal ou inférieur à 50°C, et Y est égal ou supérieur à (0,043 X + 0,83) J/mm$^2$,
dans lequel la température de transition vitreuse de surfaces des deux côtés du film intercouche est mesurée comme suit :
des matériaux malaxés ayant la composition de la couche correspondant à la couche la plus externe sont préparés ; chacun des matériaux malaxés obtenus est moulé sous pression par une machine de moulage sous pression, obtenant ainsi un film de résine d'une épaisseur de 0,35 mm ; le film de résine obtenu est laissé tel quel pendant 2 heures à une température de 25°C et une humidité relative de 30% ; après avoir laissé le film de résine tel quel pendant 2 heures, la viscoélasticité de celui-ci est mesurée en utilisant un "ARES-G2" fabriqué par TA Instruments ; en tant que gabarit, une plaque parallèle d'un diamètre de 8 mm est utilisée ; la viscoélasticité est mesurée à une fréquence de 1 Hz et une déformation de 1% dans les conditions dans lesquelles la température est abaissée de 100°C à -10°C à une vitesse de diminution de température de 3°C/min ; dans les résultats de mesure obtenus, la température maximale de la tangente de perte est prise comme une température de transition vitreuse Tg (°C).

2. Le film intercouche pour verre feuilleté selon la revendication 1,
dans lequel la teneur en groupes hydroxyle de la résine de polyvinylacétal contenue dans la première couche est égale ou supérieure à 31,5% en moles.

3. Le film intercouche pour verre feuilleté selon la revendication 1 ou 2,
dans lequel un degré d'acétylation de la résine de polyvinylacétal contenu dans la première couche est égal ou inférieur à 2% en moles.

4. Le film intercouche pour verre feuilleté selon l'une quelconque des revendications 1 à 3,
dans lequel un degré d'acétalisation de la résine de polyvinylacétal contenu dans la première couche est égal ou inférieur à 68,2% en moles.

5. Le film intercouche pour verre feuilleté selon l'une quelconque des revendications 1 à 4,
dans lequel la teneur en groupes hydroxyle de la résine de polyvinylacétal contenue dans la première couche est

supérieure à la teneur en groupes hydroxyle de la résine de polyvinylacétal contenue dans la seconde couche.

**6.** Le film intercouche pour verre feuilleté selon l'une quelconque des revendications 1 à 4,
dans lequel la teneur en plastifiant contenu dans la première couche par rapport à 100 parties en poids de la résine de polyvinylacétal contenue dans la première couche est inférieure à la teneur en plastifiant contenu dans la seconde couche par rapport à 100 parties en poids de la résine de polyvinylacétal contenue dans la seconde couche.

**7.** Le film intercouche pour verre feuilleté selon l'une quelconque des revendications 1 à 4,
dans lequel la teneur en groupes hydroxyle de la résine de polyvinylacétal contenue dans la première couche est supérieure à la teneur en groupes hydroxyle de la résine de polyvinylacétal contenue dans la seconde couche, et dans lequel la teneur en plastifiant contenu dans la première couche par rapport à 100 parties en poids de la résine de polyvinylacétal contenue dans la première couche est inférieure à la teneur en plastifiant contenu dans la seconde couche par rapport à 100 parties en poids de la résine de polyvinylacétal contenue dans la seconde couche.

**8.** Le film intercouche pour verre feuilleté selon l'une quelconque des revendications 1 à 7,
dans lequel la teneur en groupes hydroxyle de la résine de polyvinylacétal contenue dans la quatrième couche est supérieure à la teneur en groupes hydroxyle de la résine de polyvinylacétal contenue dans la seconde couche,

**9.** Verre feuilleté comprenant:

un premier élément en verre feuilleté;
un second élément en verre feuilleté; et
le film intercouche pour verre feuilleté selon l'une quelconque des revendications 1 à 8,
dans lequel le film intercouche pour verre feuilleté est disposé entre le premier élément en verre feuilleté et le second élément en verre feuilleté.

[FIG. 1]

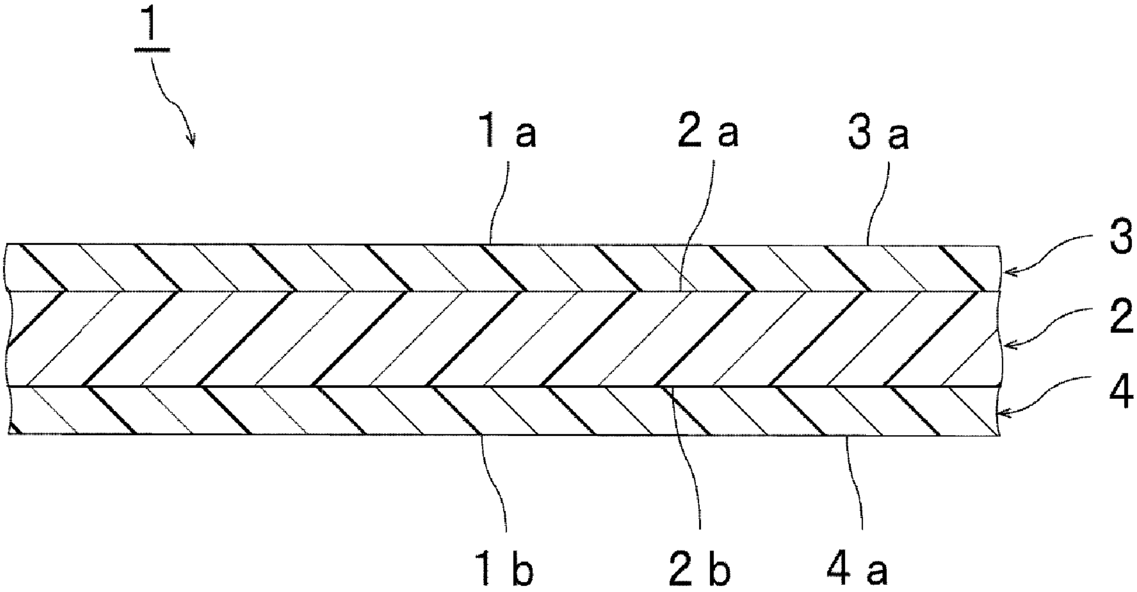


[FIG. 2]

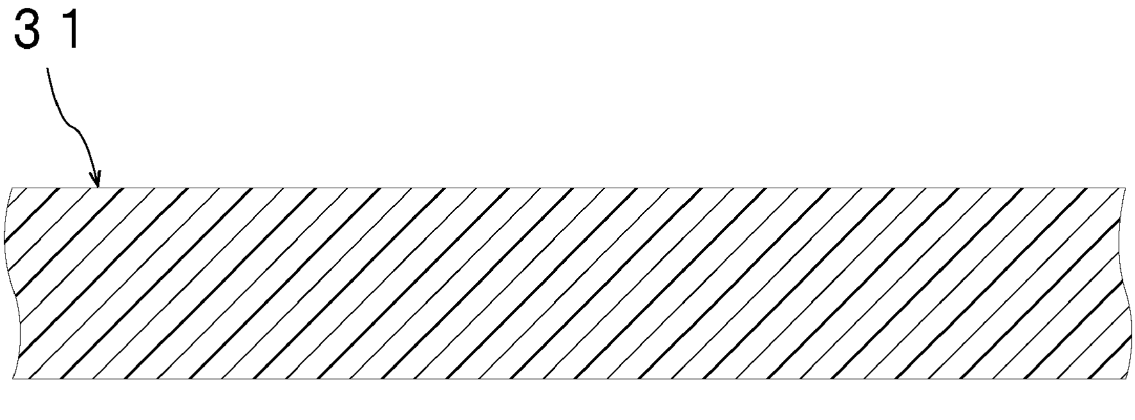

[FIG. 3]

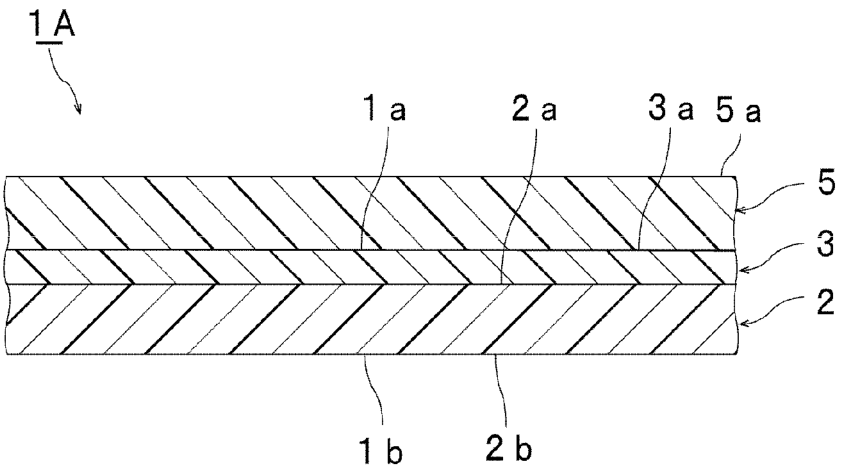


[FIG. 4]

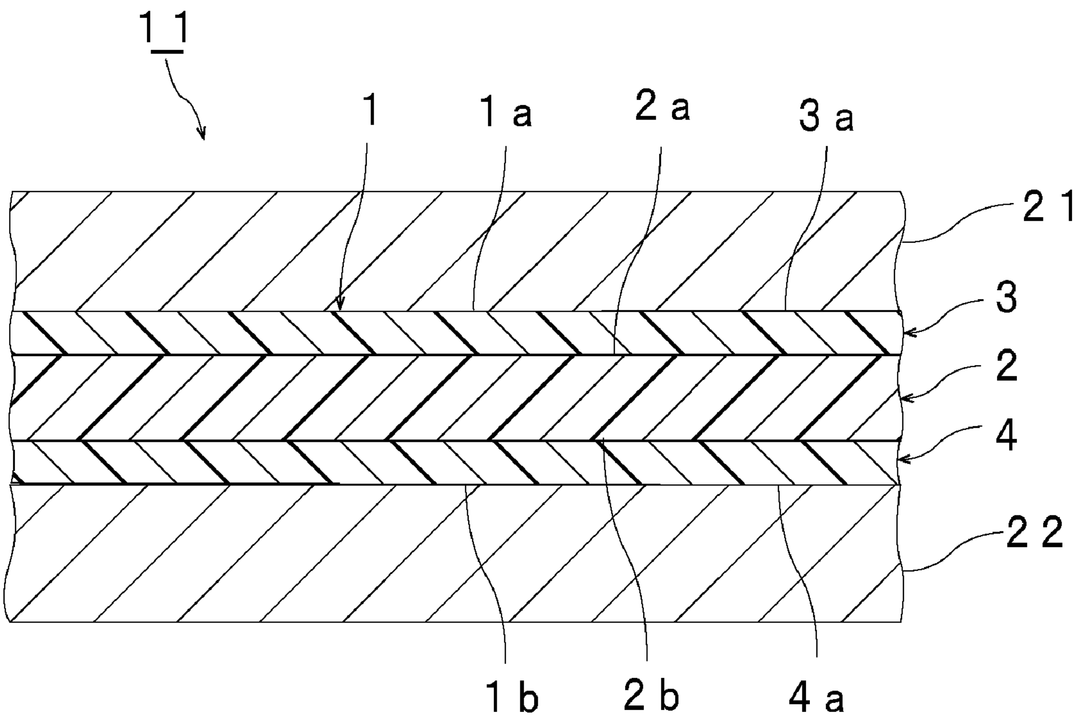

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2623471 A1
- WO 2012043816 A1
- WO 2006038332 A1